(19)

**Europäisches Patentamt**
**European Patent Office**
**Office européen des brevets**

(11) **EP 4 314 707 B1**

(12) **EUROPEAN PATENT SPECIFICATION**

(45) Date of publication and mention
of the grant of the patent:
**18.03.2026 Bulletin 2026/12**

(21) Application number: **22719838.9**

(22) Date of filing: **30.03.2022**

(51) International Patent Classification (IPC):
**G01C 15/00** (2006.01)   **G01C 15/06** (2006.01)
**G06F 3/01** (2006.01)   **G02B 27/01** (2006.01)
**G06T 7/33** (2017.01)   **G06T 7/73** (2017.01)

(52) Cooperative Patent Classification (CPC):
**G01C 15/002; G01C 15/06; G02B 27/017;**
**G06F 3/012; G06F 3/013; G06T 7/33; G06T 7/73;**
G02B 2027/0138; G02B 2027/014;
G06T 2207/30204; G06T 2207/30244

(86) International application number:
**PCT/EP2022/058383**

(87) International publication number:
**WO 2022/207687 (06.10.2022 Gazette 2022/40)**

(54) **CONFIGURATION METHOD FOR THE DISPLAY OF A BUILDING INFORMATION MODEL**

KONFIGURATIONSVERFAHREN FÜR DIE ANZEIGE EINES GEBÄUDEINFORMATIONSMODELLS

MÉTHODE DE CONFIGURATION POUR L'AFFICHAGE D'UN MODÈLE D'INFORMATION DE CONSTRUCTION

(84) Designated Contracting States:
**AL AT BE BG CH CY CZ DE DK EE ES FI FR GR**
**HR HU IE IS IT LI LT LU LV MC MK MT NL NO PL**
**PT RO RS SE SI SK SM TR**

(30) Priority: **01.04.2021 GB 202104720**

(43) Date of publication of application:
**07.02.2024 Bulletin 2024/06**

(73) Proprietor: **XYZ Reality Limited**
**Greater London, London EC1V 7LQ (GB)**

(72) Inventors:
• **AHMED, Umar**
**London Greater London EC1V 7LQ (GB)**
• **MITCHELL, David**
**London Greater London EC1V 7LQ (GB)**

(74) Representative: **Hoyle, Benjamin James**
**Hoyle IP Services Limited**
**38 Newbridge Road**
**Bath BA1 3JZ (GB)**

(56) References cited:
**US-A1- 2016 292 918   US-A1- 2017 337 743**

• **CHUNYU GAO ET AL: "Easy calibration of a head-mounted projective disply for augmented reality systems", IEEE VIRTUAL REALITY 2003 : PROCEEDINGS, 22 - 26 MARCH 2003, LOS ANGELES, CALIFORNIA; [PROCEEDINGS IEEE VIRTUAL REALITY.(VR)], IEEE COMPUTER SOCIETY, LOS ALAMITOS, CALIF. [U.A.], 22 March 2003 (2003-03-22), pages 53 - 60, XP010637611, ISBN: 978-0-7695-1882-4, DOI: 10.1109/VR.2003.1191121**
• **RAINER MAUTZ ET AL: "Survey of optical indoor positioning systems", INDOOR POSITIONING AND INDOOR NAVIGATION (IPIN), 2011 INTERNATIONAL CONFERENCE ON, IEEE, 21 September 2011 (2011-09-21), pages 1 - 7, XP031990140, ISBN: 978-1-4577-1805-2, DOI: 10.1109/IPIN.2011.6071925**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 314 707 B1

**Description**

Technical Background

Certain aspects of the present invention relate to a method of configuring a headset for display of a building information model (BIM) at a construction site. Certain preferred embodiments of the present invention use a two-dimensional marker to align a coordinate system of a positioning system for the headset and a coordinate system used for the BIM. This allows a user wearing the headset to view a virtual image of the BIM aligned with the view of the construction site from the headset. Other aspects relate to methods of initially registering a two-dimensional marker for use in aligning coordinate systems and a combined calibration marker.

Background of the Invention

Erecting a structure or constructing a building on a construction site is a lengthy process. The process can be summarised as follows. First, a three-dimensional (3D) model, known as a Building Information Model (BIM), is produced by a designer or architect. The BIM model is typically defined in real world coordinates. The BIM model is then sent to a construction site, most commonly in the form of two-dimensional (2D) drawings or, in some cases, as a 3D model on a computing device. An engineer, using a conventional stake out/set out device, establishes control points at known locations in the real-world coordinates on the site and uses the control points as a reference to mark out the location where each structure in the 2D drawings or BIM model is to be constructed. A builder then uses the drawings and/or BIM model in conjunction with the marks ("Set Out marks") made by the engineer to erect the structure according to the drawings or model in the correct place. Finally, an engineer must validate the structure or task carried out. This can be performed using a 3D laser scanner to capture a point-cloud from which a 3D model of the "as built" structure can be derived automatically. The "as built" model is then manually compared to the original BIM model. This process can take up to two weeks, after which any items that are found to be out of tolerance must be reviewed and may give rise to a penalty or must be re-done.

The above method of erecting a structure or constructing a building on a construction site has a number of problems. Each task to be carried out at a construction site must be accurately set out in this way. Typically, setting out must be done several times during a project as successive phases of the work may erase temporary markers. Further, once a task has been completed at a construction site, it is generally necessary to validate the task or check it has been done at the correct location. Often the crew at a construction site need to correctly interpret and work from a set of 2D drawings created from the BIM. This can lead to discrepancies between the built structure and the original design. Also set control points are often defined in relation to each other, meaning that errors chaotically cascade throughout the construction site. Often these negative effects interact over multiple layers of contractors, resulting in projects that are neither on time, within budget nor to the correct specification.

WO2019/048866 A1 (also published as EP3679321), which is incorporated by reference herein, describes a headset for use in displaying a virtual image of a BIM in relation to a site coordinate system of a construction site. In one example, the headset comprises an article of headwear having one or more position-tracking sensors mounted thereon, augmented reality glasses incorporating at least one display, a display position tracking device for tracking movement of the display relative to at least one of the user's eyes and an electronic control system. The electronic control system is configured to convert a BIM defined in an extrinsic, real world coordinate system into an intrinsic coordinate system defined by a position tracking system, receive display position data from the display position device and headset tracking data from a headset tracking system and render a virtual image of the BIM relative to the position and orientation of the article of headwear on the construction site and relative position of the display relative to the user's eye and transmit the rendered virtual image to the display which is viewable by the user.

WO2019/048866 A1 describes one method of generating the transformation that maps the extrinsic, real world coordinate system of the BIM to the intrinsic coordinate system defined by a position tracking system. In this method, control points of known locations are defined. These may be the aforementioned control points that are established using a conventional stake out/set out device. For example, Figure 4 of WO2019/048866 A1 shows multiple control points that are defined within a tracked volume. A user then uses a calibration tool to measure the locations of the multiple control points using the position tracking system. An example calibration tool is shown in Figure 6 of WO2019/048866 A1. It is fitted with sensors in a similar manner to the headset and may be attached to a control point to make the measurement.

US 2016/292918 A1, incorporated by reference herein, describes a method and system for projecting a model at a construction site using a network-coupled hard hat. Cameras are connected to the hard hat and capture an image of a set of registration markers. A position of the user device is determined from the image and an orientation is determined from motion sensors. A BIM is downloaded and projected to a removable visor based on the position and orientation.

WO2019/048866 A1 and US 2016/292918 A1 teach different incompatible methods for displaying a BIM at a construction site. Typically, a user needs to choose a suitable one of these described systems for any implementation at a construction site. The systems and methods of WO2019/048866 A1 provide high accuracy continuous tracking of the headset at a construction site for display of the BIM. However, even high accuracy position tracking systems still have inherently noisy measurements that make maintaining high accuracy difficult. Calibration of the "lighthouse" beacon system of WO2019/048866 A1 further requires the combination of the headset and the calibration tool. Often it can take up to 15 minutes to initialise a headset ready for BIM display on entry of a new area of the construction site where tracking is in place. The systems and methods of US 2016/292918 A1 provide a lower accuracy system that may be good for coarse positioning, such as lowering structures into place from a crane. It typically requires a user to stay relatively static within one defined area of the construction site and to stay within line of site of at least one registration marker. This makes it less useful for dynamic tracking of a user within a chaotic real-world building site.

There is thus still a specific challenge of providing an easy-to-use augmented reality solution for BIM display that is suitable for the practical reality of actual construction sites. Ideally, a user, such as a surveyor, engineer or construction worker, wants to quickly activate a BIM augmented reality overlay to check the construction.

Summary of the Invention

Aspects of the present invention are set out in the appended independent claims. Variations of these aspects are set out in the appended dependent claims. Examples that are not claimed are also set out in the description below.

Brief Description of the Drawings

Examples of the invention will now be described, by way of example only, with reference to the accompanying drawings, in which:

FIG. 1A is a schematic illustration of one example positioning system in use at a construction site.
FIG. 1B is a schematic illustration showing how BIM data may be aligned with a view of the construction site.
FIG. 2A is schematic illustration showing, in perspective and from one side, an example hard hat incorporating an augmented reality display.
FIG. 2B is schematic illustration showing electronic components implementing a tracking module and an augmented reality display module for the hard hat of FIG. 2A.
FIGS. 3A to 3F are schematic illustrations showing different arrangements of 2D markers at a construction site according to different examples.
FIGS. 4A and 4B are schematic illustrations showing how positions of control markers and 2D markers may be measured using surveying equipment.

FIG. 5A is a schematic illustration showing how different coordinate systems for a BIM, a camera and a positioning system may be aligned to configure an example headset.
FIG. 5B is a schematic illustration showing how corners may be located in an example image acquired by a camera of the headset.
FIG. 6 is a flow chart showing a method for configuring a headset for display of a building information model (BIM) at a construction site according to an example.

Detailed Description

*Introduction*

The present invention provides a method for quickly configuring an augmented reality headset for BIM display, while allowing dynamic high accuracy tracking within busy construction sites. The method is designed for use with a headset that has at least one positioning system for tracking a user within the construction site. This positioning system may use a variety of technologies, and the method is designed to work with one or more drop-in, black-box positioning systems that use an internal or intrinsic coordinate system for locating the headset within the construction site.

The present examples use a camera coupled to the headset to capture an image of one or more two-dimensional (2D) markers. This camera may be an additional camera or may form part of a positioning system. The one or more 2D markers are used to determine a pose - i.e. a position and orientation - of the camera with respect to a frame of reference used by the BIM. This may be an extrinsic, real world coordinate system used by the BIM. This then allows a transformation to be defined that maps between an origin of a camera coordinate system that is used as a reference for the captured image and an origin of the coordinate system used by the BIM. Based on a specified spatial relationship between the camera and the headset, e.g. in the form of a known relative location and orientation of the camera from a centre-point of the headset that is used as a point location during tracking by the coordinate system, the origin of the camera coordinate system may also be mapped to the origin of the positioning system. In total, this then allows for a transformation between the positioning system and the BIM coordinate systems to be defined, i.e. by way of the camera and obtained 2D marker image. This transformation may then be used to align portions of the BIM with the pose of the headset as tracked by the positioning system for projection and display as a virtual or augmented reality view.

The present invention avoids the need for the calibration tool that is described in WO2019/048866 A1. Instead, a user wearing the headset just needs an image of a 2D marker to perform the configuration. This may be obtained using a relatively low-specification camera, or from an incidental frame of video that includes the 2D marker. In certain cases, it has been found to be difficult to track smaller objects such as the calibration tool, and measurements from calibration tools are often noisy due to both human and tracking factors.

In contrast to US 2016/292918 A1, using the presently described method, the user does not need to remain in line of sight of a 2D marker or to stay reasonably static to allow display of the BIM, at least one positioning system tracks the headset with respect to its own coordinate system, the 2D marker is used once or intermittently to align the coordinate system of the positioning system with the BIM. This then allows for flexibility, a user is not restricted to one particular positioning system; any positioning system may be installed in a modular plug-in manner allowing headsets to take advantage of new more accurate approaches to tracking, including those that incorporate so-called deep neural network architectures.

It should be noted that a naive combination of WO2019/048866 A1 and US 2016/292918 A1 simply teaches to use of the camera tracking system of US 2016/292918 A1 as a positioning system instead of the inside out tracking system preferred by WO2019/048866 A1. This is generally just a positioning system as described in US 2016/292918 A1 without the benefits of WO2019/048866 A1. WO2019/048866 A1 generally teaches against use of the camera tracking system of US 2016/292918 A1 as a positioning system instead of the inside out tracking system preferred by WO2019/048866 A1 as it stresses that comparative systems do not provide the desired levels of millimetre accuracy, and this teaching also applies to the registration marker tracking described in US 2016/292918 A1.

In general, the presently described examples provide a flexible alignment method to allow BIM display using a variety of positioning systems, including high accuracy systems. The presently described examples allow stand-alone headset solutions that may be quickly initialised at different areas in a construction site, thus allowing users to turn on and off a BIM overlay while working, where the overlay is constantly accurately aligned with a tracked position of the user.

In additional examples, a method of initially configuring one or more two-dimensional markers is described. In these examples, two-dimensional markers may be placed at arbitrary or custom locations around a construction site. This differs from comparative methods where markers must be placed at specific locations with specific orientations (e.g., with a specific pose) in order to operate as registration markers. In the described additional examples, surveying equipment (such as a total station) is used to determine a plurality of points (e.g., 3 or 4) in relation to a placed two-dimensional marker (e.g., the corner points or total station markers placed a fixed distance from the two-dimensional marker). The two-dimensional marker is then represented in a virtual space following capture by a camera and this virtual representation is correlated with the positions of the measured plurality points to determine a mapping between a (virtual) three-dimensional space and the actual physical construction site (e.g., as defined in a geodetic or geographic coordinate system). This avoids a problem of markers being placed inaccurately or incorrectly, which in turn can cause misalignment of virtual space models and the real world.

*Certain Term Definitions*

Where applicable, terms used herein are to be defined as per the art. To ease interpretation of the following examples, explanations and definitions of certain specific terms are provided below.

The term "positioning system" is used to refer to a system of components for determining one or more of a location and orientation of an object within an environment. The terms "positional tracking system" and "tracking system" may be considered alternative terms to refer to a "positioning system", where the term "tracking" refers to the repeated or iterative determining of one or more of location and orientation over time. A positioning system may be implemented using a single set of electronic components that are positioned upon an object to be tracked, e.g. a stand-alone system installed in the headset. In other cases, a single set of electronic components may be used that are positioned externally to the object. In certain cases, a positioning system may comprise a distributed system where a first set of electronic components is positioned upon an object to be tracked and a second set of electronic components is positioned externally to the object. These electronic components may comprise sensors and/or processing resources (such as cloud computing resources). A positioning system may comprise processing resources that may be implemented using one or more of an embedded processing device (e.g., upon or within the object) and an external processing device (e.g., a server computing device). Reference to data being received, processed and/or output by the positioning system may comprise a reference to data being received, processed and/or output by one or more components of the positioning system, which may not comprise all the components of the positioning system.

The term "pose" is used herein to refer to a location and orientation of an object. For example, a pose may comprise a coordinate specifying a location with reference to a coordinate system and a set of angles representing orientation of a point or plane associated with the object within the coordinate system. The point or plane may, for example, be aligned with a defined face of the object or a particular location on the object. In certain cases, an orientation may be specified as a normal vector or a set of angles with respect to defined orthogonal axes. In other cases, a pose may be defined by a plurality of coordinates specifying a respective plurality of locations with reference to the coordinate system, thus allowing an orientation of a rigid body encompassing the points to be determined. For a rigid object, the location may be defined with respect to a particular point on the object. A pose may specify the location and orientation of an object with regard to one or more degrees of freedom within the coordinate system. For example, an object may comprise a rigid body with three or six degrees of freedom. Three degrees of freedom may be defined in relation to translation with respect to each axis in 3D space, whereas six degrees of freedom may add a rotational component with respect to each axis. In other cases, three degrees of freedom may represent two orthogonal coordinates within a plane and an angle of rotation (e.g., [x, y, θ]). Six degrees of freedom may be defined by an [x, y, z, roll, pitch, yaw] vector, where the variables x, y, z represent a coordinate in a 3D coordinate system and the rotations are defined using a right hand convention with respect to three axes, which may be the x, y and z axes. In examples herein relating to a headset, the pose may comprise the location and orientation of a defined point on the headset, or on an article of headwear that forms part of the headset, such as a centre point within the headwear calibrated based on the sensor positioning on the headwear.

The term "coordinate system" is used herein to refer to a frame of reference used by each of a positioning system, a camera, and a BIM. For example, a pose of an object may be defined within three-dimensional geometric space, where the three dimensions have corresponding orthogonal axes (typically x, y, z) within the geometric space. An origin may be defined for the coordinate system where lines defining the axes meet (typically, set as a zero point - (0, 0, 0)). Locations for a coordinate system may be defined as points within the geometric space that are referenced to unit measurements along each axis, e.g. values for x, y, and z representing a distance along each axis. In certain cases, quaternions may be used to represent at least an orientation, of an object such as a headset or camera within a coordinate system. In certain cases, dual quaternions allow positions and rotations to be represented. A dual quaternion may have 8 dimensions (i.e., comprise an array with 8 elements), while a normal quaternion may have 4 dimensions.

The terms "intrinsic" and "extrinsic" are used in certain examples to refer respectively to coordinate systems within a positioning system and coordinate systems outside of any one positioning system. For example, an extrinsic coordinate system may be a 3D coordinate system for the definition of an information model, such as a BIM, that is not associated directly with any one positioning system, whereas an intrinsic coordinate system may be a separate system for defining points and geometric structures relative to sensor devices for a particular positioning system.

Certain examples described herein use one or more transformations to convert between coordinate systems. The term "transformation" is used to refer to a mathematical operation that may be performed on one or points (or other geometric structures) within a first coordinate system to map those points to corresponding locations within a second coordinate system. For example, a transformation may map an origin defined in the first coordinate system to a point that is not the origin in the second coordinate system. A transformation may be performed using a matrix multiplication. In certain examples, a transformation may be defined as a multi-dimensional array (e.g., matrix) having rotation and translation terms. For example, a transformation may be defined as a 4 by 4 (element) matrix that represents the relative rotation and translation between the origins of two coordinate systems. The terms "map", "convert" and "transform" are used interchangeably to refer to the use of a transformation to determine, with respect to a second coordinate system, the location and orientation of objects originally defined in a first coordinate system. It may also be noted that an inverse of the transformation matrix may be defined that maps from the second coordinate system to the first coordinate system.

Certain examples described herein refer to a "spatial relationship". This is a relationship between points in space. It may comprise a fixed or rigid geometric relationship between one or more points that are tracked by a positioning system (such as a defined centre-point of a headset) and a camera, such as a location of a pin hole in a model of the camera. The spatial relationship may be determined via direct measurement, via defined relative positioning of objects as set by a fixed and specified mounting (e.g., a rigid mount may fix sensor devices at a specific distance from a camera with specific rotations), and/or via automated approaches that compute the relationship based on data from the sensors and the camera.

Certain examples described herein are directed towards a "headset". The term "headset" is used to refer to a device suitable for use with a human head, e.g. mounted upon or in relation to the head. The term has a similar definition to its use in relation to so-called virtual or augmented reality headsets. In certain examples, a headset may also comprise an article of headwear, such as a hard hat, although the headset may be supplied as a kit of separable components. These separable components may be removable and may be selectively fitted together for use, yet removed for repair, replacement and/or non-use. Although the term "augmented reality" is used herein, it should be noted that this is deemed to be inclusive of so-called "virtual reality" approaches, e.g. includes all approaches regardless of a level of transparency of an external view of the world.

Certain positioning systems described herein use one or more sensor devices to track an object. Sensor devices may include, amongst others, monocular cameras, stereo cameras, colour cameras, greyscale cameras, event cameras, depth cameras, active markers, passive markers, photodiodes for detection of electromagnetic radiation, radio frequency identifiers, radio receivers, radio transmitters, and light transmitters including laser transmitters. A positioning system may comprise one or more sensor devices upon an object. Certain, but not all, positioning systems may comprise external sensor devices such as tracking devices. For example, an optical positioning system to track an object with active or passive markers within a tracked volume may comprise externally mounted greyscale camera plus one or more active or passive markers on the object.

Certain examples provide a headset for use on a construction site. The term "construction site" is to be interpreted broadly and is intended to refer to any geographic location where objects are built or constructed. A "construction site" is a specific form of an "environment", a real-world location where objects reside. Environments (including construction sites) may be both external (outside) and internal (inside). Environments (including construction sites) need not be continuous but may also comprise a plurality of discrete sites, where an object may move between sites. Environments include terrestrial and non-terrestrial environments (e.g., on sea, in the air or in space).

The term "render" has a conventional meaning in the image processing and augmented reality arts and is used herein to refer to the preparation of image data to allow for display to a user. In the present examples, image data may be rendered on a head-mounted display for viewing. The term "virtual image" is used in an augmented reality context to refer to an image that may be overlaid over a view of the real-world, e.g. may be displayed on a transparent or semi-transparent display when viewing a real-world object. In certain examples, a virtual image may comprise an image relating to an "information model". The term "information model" is used to refer to data that is defined with respect to an extrinsic coordinate system, such as information regarding the relative positioning and orientation of points and other geometric structures on one or more objects. In examples described herein the data from the information model is mapped to known points within the real-world as tracked using one or more positioning systems, such that the data from the information model may be appropriate prepared for display with reference to the tracked real-world. For example, general information relating to the configuration of an object, and/or the relative positioning of one object with relation to other objects, that is defined in a generic 3D coordinate system may be mapped to a view of the real-world and one or more points in that view.

The terms "engine" and "control system" is used herein to refer to either hardware structure that has a specific function (e.g., in the form of mapping input data to output data) or a combination of general hardware and specific software (e.g., specific computer program code that is executed on one or more general purpose processors). An "engine" or a "control system" as described herein may be implemented as a specific packaged chipset, for example, an Application Specific Integrated Circuit (ASIC) or a programmed Field Programmable Gate Array (FPGA), and/or as a software object, class, class instance, script, code portion or the like, as executed in use by a processor.

The term "camera" is used broadly to cover any camera device with one or more channels that is configured to capture one or more images. In this context, a video camera may comprise a camera that outputs a series of images as image data over time, such as a series of frames that constitute a "video" signal. It should be noted that any still camera may also be used to implement a video camera function if it is capable of outputting successive images over time. Reference to a camera may include a reference to any light-based sensing technology including event cameras and LIDAR sensors (i.e. laser-based distance sensors). An event camera is known in the art as an imaging sensor that responds to local changes in brightness, wherein pixels may asynchronously report changes in brightness as they occur, mimicking more human-like vision properties.

The term "image" is used to refer to any array structure comprising data derived from a camera. An image typically comprises a two-dimensional array structure where each element in the array represents an intensity or amplitude in a particular sensor channel. Images may be greyscale or colour. In the latter case, the two-dimensional array may have multiple (e.g., three) colour channels. Greyscale images may be preferred for processing due to their lower dimensionality. For example, the images processed in the later described methods may comprise a luma channel of a YUV video camera.

The term "two-dimensional" or "2D" marker is used herein to describe a marker that may be placed within an environment. The marker may then be observed and captured within an image of the environment. The 2D marker may be considered as a form of fiducial or registration marker. The marker is two-dimensional in that the marker varies in two dimensions and so allows location information to be determined from an image containing an observation of the marker in two dimensions. For example, a 1D marker barcode only enables localisation of the barcode in one dimension, whereas a 2D marker or barcode enables localisation within two dimensions. In one case, the marker is two-dimensional in that corners may be located within the two dimensions of the image. The marker may be primarily designed for camera calibration rather than information carrying, however, in certain cases the marker may be used to encode data. For example, the marker may encode 4-12 bits of information that allows robust detection and localisation within an image. The markers may comprise any known form of 2D marker including AprilTags as developed by the Autonomy, Perception, Robotics, Interfaces, and Learning (APRIL) Robotics Laboratory at the University of Michigan, e.g. as described in the paper "AprilTag 2: Efficient and robust fiducial detection" by John Wang and Edwin Olson (published at the Proceedings of the IEEE/RSJ International Conference on Intelligent Robots and Systems October 2016) or ArUco markers as described by S. Garrido-Jurado et al in the 2014 paper "Automatic generation and detection of highly reliable fiducial markers under occlusion", (published in Pattern Recognition 47, 6, June 2014), both of which are incorporated by reference herein. Although the markers shown in the Figures are block or matrix based, other forms with curved or non-linear aspects may also be used (such as RUNE-Tags or reacTIVision tags). Markers also need not be square or rectangular, and may have angled sides. As well as specific markers for use in robotics, common Quick Response - QR - codes may also be used. The 2D markers described in examples herein may be printed onto a suitable print medium and/or display on one or more screen technologies (including Liquid Crystal Displays and electrophoretic displays). Although two-tone black and white markers are preferred for robust detection with greyscale images, the markers may be any colour configured for easy detection. In one case, the 2D markers may be cheap disposable stickers for affixing to surfaces within the construction site.

The term "control marker", "set-out marker" or "survey marker" is used to refer to markers or targets that are used in surveying, such as ground-based surveying. Typically, these markers or targets comprise a reflective and/or clearly patterned surface to allow accurate measurements from an optical instrument such as a total station or theodolite. These markers or targets may comprise existing markers or targets as used in the art of surveying. These markers or targets may simply comprise patterned reflective stickers that may be affixed to surfaces within a construction site.

*Example of Tracking on a Construction Site*

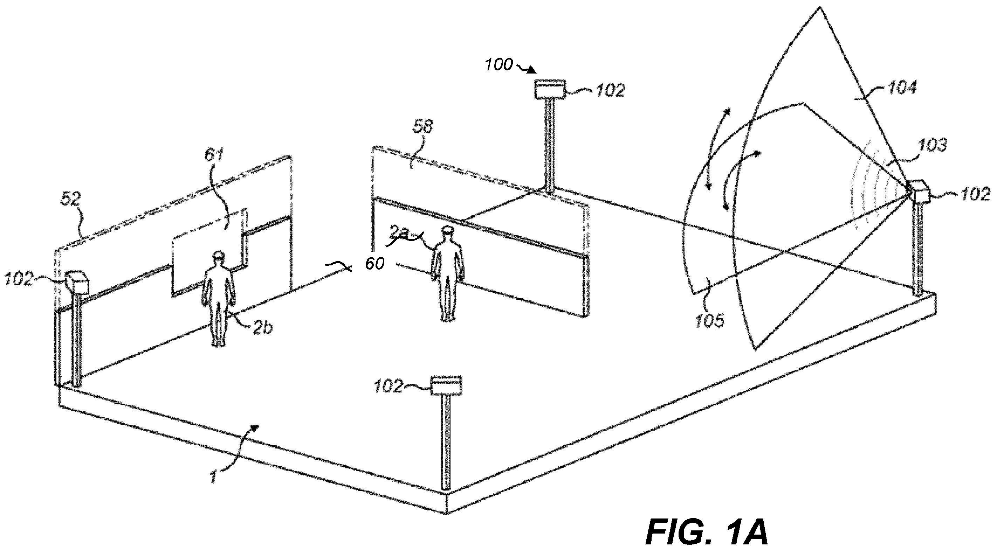

FIGS. 1A to 2B show an example of tracking that is performed on a construction site using a headset and a positioning system. It should be noted that the positioning system described in this example is provided for ease of understanding the present invention (e.g., may be seen as a prototype configuration) but is not to be taken as limiting; the present invention may be applied to many different types of positioning system and is not limited to the particular approaches described in the example.

FIG. 1A shows a location 1 in a construction site. FIG. 1A shows a positioning system 100 that is set up at the location 1. In the present example, the positioning system 100 comprises a laser-based inside-out positional tracking system as described in WO2019/048866 A1; however, this positioning system is used for ease of explanation and the present embodiment is not limited to this type of positioning system. In other implementations different positioning systems may be used, including optical marker-based high-accuracy positioning systems such as those provided by Natural-Point, Inc of Corvallis, Oregon, USA (e.g., their supplied OptiTrack systems), and monocular, depth and/or stereo camera simultaneous localisation and mapping (SLAM) systems. SLAM systems may be sparse or dense, and may be feature-based and/or use trained deep neural networks. So-called direct systems may be used to track pixel intensities and so-called indirect systems may be feature-based. Indirect methods may be trained using deep neural networks. Examples of "traditional" or non-neural SLAM methods include ORB-SLAM and LSD-SLAM, as respectively described in the papers "ORB-SLAM: a Versatile and Accurate Monocular SLAM System" by Mur-Artal et al. published in IEEE Transactions on Robotics in 2015 and "LSD-SLAM: Large-Scale Direct Monocular SLAM" by Engel et al as published in relation to the European Conference on Computer Vision (ECCV), 2014, both of these publications being incorporated by reference herein. Example SLAM systems that incorporate neural network architectures include "Code-SLAM - Learning a Compact Optimisable Representation for Dense Visual SLAM" by Bloesch et al (published in relation to the Conference on Computer Vision and Pattern Recognition - CVPR - 2018) and "CNN-SLAM: Real-time dense Monocular SLAM with Learned Depth Prediction" by Tateno et al (published in relation to CVPR 2017), these papers also being incorporated by reference herein. It will be understood that the base stations 102 may be omitted for certain forms of SLAM positioning system.

In FIG. 1A, the example positioning system 100 comprises a plurality of spaced apart base stations 102. In one particular implementation example, a base station 102 comprises a tracking device that is selectively operable to emit an omnidirectional synchronisation pulse 103 of infrared light and comprises one or more rotors that are arranged to sweep one or more linear non-visible optical fan-shaped beams 104, 105 across the location 1, e.g. on mutually orthogonal axes as shown. In the present embodiment, the base stations 102 are separated from each other by a distance of up to about 5-10 m. In the example of FIG. 1A, four base stations 102 are employed, but in other embodiments fewer than four base stations 102 may be used, e.g. one, two or three base stations 102, or more than four base stations. As described in WO2019/048866 A1, by sweeping the laser beams 104, 105 across the construction site 1 at an accurate constant angular speed and synchronising the laser beams 104, 105 to an accurately timed synchronisation pulse 103, each base station 102 in the laser inside-out positioning system may generate two mutually orthogonal spatially-modulated optical beams 104, 105 in a time-varying manner that can be detected by opto-electronic sensors within the tracked volume for locating the position and/or orientation of one or more tracked objects within the tracked volume. Other positioning systems may use other technologies to track an object using different technologies, including the detection of one or more active or passive markers located on the object as observed by tracking devices in the form of one or more cameras mounted at the base stations 102 and observing the tracked volume. In SLAM systems tracking may be performed based on a stream of data from one or more camera devices (and possible additional odometry or inertial measurement unit - IMU - data).

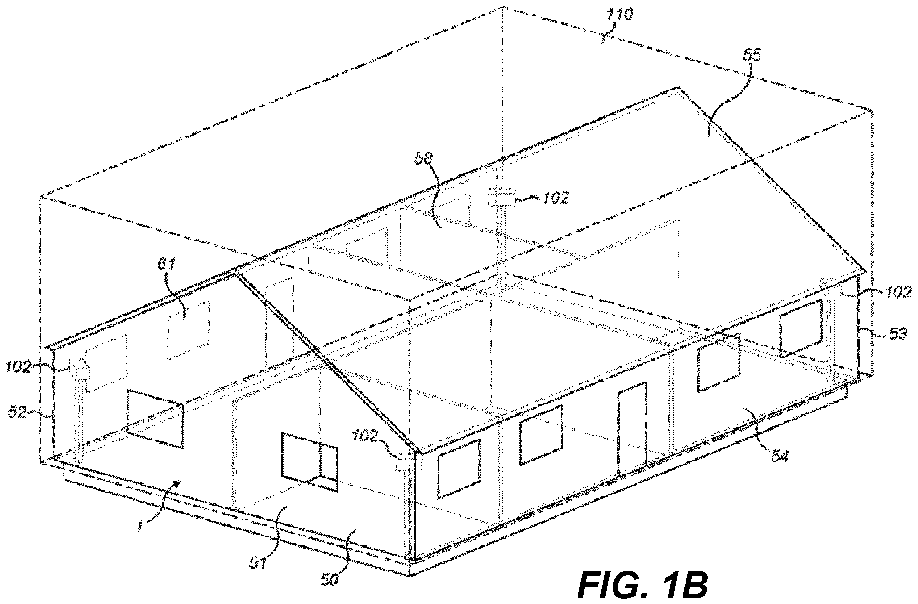

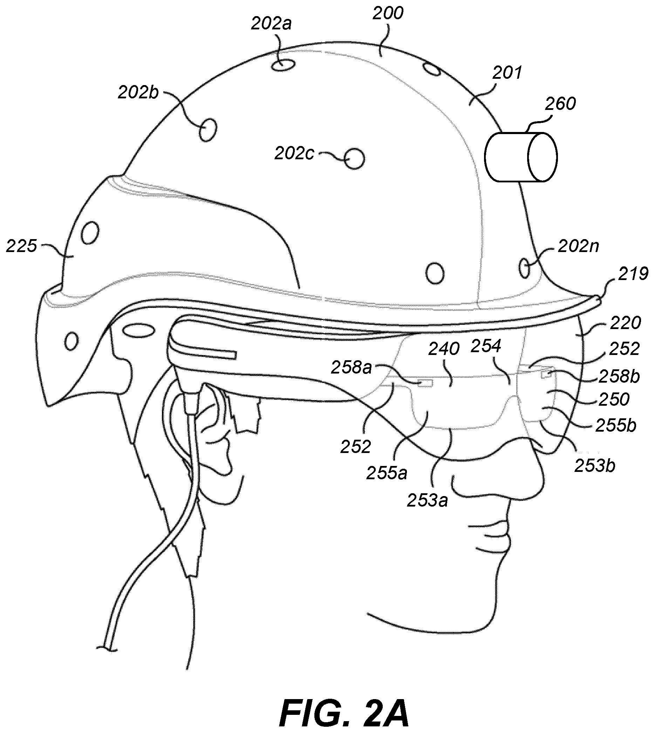

FIG. 1A also shows a user 2a, 2b. The user 2a, 2b wears a headset such as that shown in FIG. 2A that allows them to use the positioning system 100 to view, via a head-mounted display (HMD) of the headset, a virtual image of one or more internal partitions 52, 58 that are defined in the BIM and that may be aligned with part-constructed portions of a building 60. FIG. 1B shows a three-dimensional BIM 110 for a building 50 to be constructed. The building 50 has exterior walls 51, 52, 53, 54, a roof 55 and interior partitions, one of which is shown at 58. One of the walls 52 is designed to include a window 61. The BIM 110 is defined with respect to an extrinsic coordinate system, which may be a geographic coordinate system (e.g., a set of terrestrial coordinates) or a specific Computer Aided Design (CAD) reference origin. By configuring the alignment of the BIM 110 with the first location 1, a user 2a, 2b may see how a portion of the building in progress, such as window 61 matches up with the original three-dimensional specification of the building within the BIM. Adjustments may then be made to the building in progress if the building 50 is not being constructed according to the specification. This process is described in detail in WO2019/048866 A1.

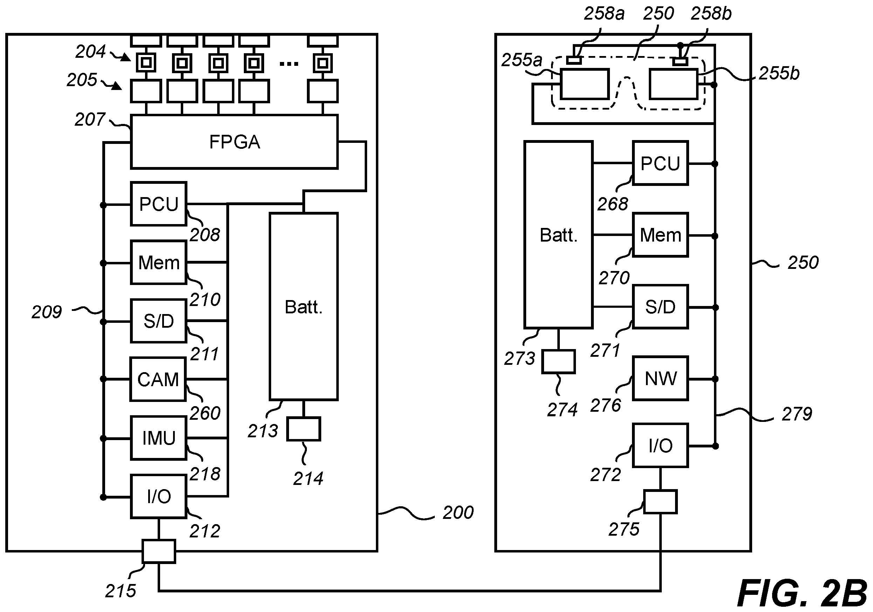

FIG. 2A shows a hard hat 200 and a set of augmented reality glasses 250. These collectively form a headset for displaying an augmented reality BIM within a construction site. The headset is similar to that described in WO2019/048866 A1, with certain important differences for improved BIM display and configuration. It should be noted that FIGS. 2A and 2B shows just one possible hardware configuration; the method described later below may be performed on different hardware for different implementations.

The hard hat 200 comprises an article of headwear in the form of a construction helmet 201 of essentially conventional construction, which is fitted with a plurality of sensor devices 202a, 202b, 202C, ..., 202n and associated electronic circuitry, as described in more detail below, for tracking the position of the hard hat 200. The helmet 601 comprises a protruding brim 219 and may be configured with the conventional extras and equipment of a normal helmet. In the present example, the plurality of sensor devices 202 track the position of the hard hat 200 within a tracked volume defined by an inside-out positional tracking system that is set up at a construction site, such as the positioning system 100 at the location 1 as described above in relation to FIG. 1A. However, it should be noted that alternative positioning systems may also be used, e.g. where the plurality of sensor devices 202 comprise passive and/or active markers or one or more camera devices for SLAM navigation. For example, although FIGS. 2A and 2B comprise particular sensor devices for particular positioning systems, these are provided for ease of explanation only; implementations may use any type or technology for the positioning systems, including known or future "off-the-shelf" positioning systems.

FIG. 2B shows the electronic circuitry that may form part of the headset of FIG. 2A. Again, this electronic circuity may differ for different positioning systems; however, many positioning systems may share the general architecture described here. The electronic circuitry may be mounted within, upon, or in association with one or more of the hard hat 200 and the augmented reality glasses 250. For example, the left-hand side of FIG. 2B shows electronic circuitry that may be incorporated within or mounted upon the hard hat 200 and the right-hand side of FIG. 2B shows electronic circuitry that may be incorporated within or mounted upon the augmented reality glasses 250. The configurations shown in FIG. 2A and 2B are provided for example only, and actual implementations may differ while retaining the functionality discussed later below. The electronic components of the hard hat 200 may be accommodated within a protected cavity 225 formed in the helmet 201 as shown in FIG. 2A. The hard hat 200 may have suspension bands inside the helmet 201 to spread the weight of the hard hat 200 as well as the force of any impact over the top of the head.

The example helmet 201 in FIG. 2A shows a set of $n$ sensor devices $202i$ that are mounted with respect to the helmet 201. The number of sensor devices may vary with the chosen positioning system 100, but in the example shown in FIG. 1A, n may equal 32. In these examples, the sensor devices $202i$ are distributed over the outer surface of the helmet 201, and in certain examples at least five sensors may be required to track the position and orientation of the hard hat 200 with high accuracy. In the present example, as shown in FIG. 2B, each sensor device $202i$ comprises a corresponding photodiode 204 that is sensitive to infrared light and an associated analogue-to-digital converter 205a. The photodiodes 204 may be positioned within recesses formed in the outer surface of the helmet 201. In the present example of FIGS. 2A and 2B, digital pulses received from the analogue-to-digital converters 205 are time-stamped and aggregated by a Field Programmable Gate Array (FPGA) 207, which is connected to a processor 208 by a local data bus 209. The local data bus 209 also connects to a memory device 210, a storage device 211, and an input/output (I/O) device 212. The electronic components of the hard hat 200 are powered by a rechargeable battery unit 213. A power connector socket 214 is provided for connecting the battery unit 213 to a power supply for recharging. The I/O device 212 may comprise a dock connector 215 such, for example, a USB port, for communicatively coupling the electronic circuitry of the hard hat 200 to other devices and components. The local data bus 209 also connects to an (optional) inertial measurement unit (IMU) 218 of the kind found in virtual reality and augmented reality headsets, which comprises a combination of one or more accelerometers and one or more gyroscopes. The IMU may comprise one accelerometer and one gyroscope for each of pitch, roll and yaw modes. For different positioning system technologies, components 204, 205 and 207 may be replaced with corresponding sensor devices for those technologies.

Returning to FIG. 2A, in the present example, the headset comprises safety goggles 220, which serve not only to protect the user's eyes while on location in the building site, but also serve to protect the augmented reality glasses 250, which are mounted inside the goggles 220. In the present example, the goggles 220 are mounted to the helmet 201 such that they are recessed slightly behind the brim 219 to afford a degree of protection for the goggles 220. It will be understood that in embodiments where the augmented reality glasses 200 themselves are ruggedised and ready for construction, the safety goggles 220 may be omitted. In other embodiments, the helmet 201 may comprise a safety visor.

The augmented reality glasses 200 comprise a shaped transparent (i.e., optically clear) plate 240 that is mounted between two temple arms 252. In the present example, the augmented reality glasses 250 are attached to the hard hat 200 such that they are fixedly secured in an "in-use" position relative to the sensors *202i* and are positioned behind the safety goggles 220. The augmented reality glasses 250 may, in some embodiments, be detachable from the hard hat 200, or they may be selectively movable, for example by means of a hinge between the hard hat 200 and the temple arms 252, from the in-use position to a "not-in-use" position (not shown) in which they are removed from in front of the user's eyes.

In the example of FIG. 2A, the transparent plate 240 is arranged to be positioned in front of the user's eyes and comprises two eye regions 253a, 253b, which are arranged to be disposed in front of the user's right and left eyes respectively, and an interconnecting bridge region 254. Attached to, or incorporated in, each of the eye regions 253a, 253b is a respective transparent or semi-transparent display device 255a, 255b for displaying augmented reality media content to a user as described below, whilst allowing the user to view his or her real-world surroundings through the glasses 250. The augmented reality glasses 250 also comprise lenses (not shown) positioned behind each display device 255a, 255b for viewing an image displayed by each display device. In some examples, the lenses may be collimating lenses such that an image displayed by each display device 255a, 255b appears to the user to be located at infinity. In some examples, the lenses may be configured to cause rays of light emitted by the display devices 255a, 255b to diverge, such that an image displayed by each display device 255a, 255b appears at a focal distance in front of the augmented reality glasses 250 that is closer than infinity. In the present example, the lenses are configured and arranged with the display devices 255a, 255b such that images displayed by the display devices 255a, 255b appear to be located at a focal distance of 8 m in front of the user. It should be noted that the configuration of the augmented reality glasses 250 may also change as technologies develop - they may be implemented by any set of hardware suitable for displaying an overlay of a virtual image for augmented reality. In other examples, similar systems may also be used for virtual reality applications.

In certain variations, eye-tracking devices may also be used. These may not be used in all implementations but may improve display in certain cases with a trade-off of additional complexity. The later described methods may be implemented without eye-tracking devices.

The example of FIGS. 2A and 2B shows additional eye-tracking hardware that may be used in variations. Within each eye region 253a, 253b, the transparent plate 240 carries a respective eye-tracking device 258a, 258b for tracking the position of the user's eyes when the hard hat 200 is worn. In particular, each of the eye-tracking devices 258a, 258b is configured to detect the position of the centre of the pupil of a respective one of the user's eyes for the purpose of detecting movement of the augmented reality glasses 250 relative to the user's eyes in use and to generate and output display position data relating the position of the augmented reality glasses 250 relative to the user's head. Those skilled in the art will be aware of numerous other solutions for tracking the position of the augmented reality glasses 250 relative to the user's head in use, including optical sensors of the kind disclosed by US 9754415 B2 and a position obtaining unit of the kind disclosed by US 2013/0235169 A1, both of which are incorporated by reference herein. Monitoring movement of the augmented reality glasses 250 relative to the user's head may be useful in cases where the hard hat 200 is liable to move relative to the user's head but may not be required where the hard hat 200 is relatively secured to the user's head. In the present described variation, two eye-tracking devices 258a, 258b are provided, one associated with each of the user's eyes, but in other implementations, a single eye-tracking device may be employed associated with one of the eyes.

In terms of the electronic circuitry as shown in FIG. 2B, the transparent display devices 255a, 255b and eye-tracking devices 258a, 258b are connected to a local data bus 279 for interconnection with a processor 268, a memory unit 270, a storage device 271, and an input/output (I/O) device 272. Power for the electronic components is provided by a rechargeable battery unit 273, which is connected to a power connector socket 274 for connecting the battery unit 273 to a power supply for recharging. The local data bus 279 is also connected to a dock connector 275 and a network interface 276. The network interface 276 may comprise a wireless (WiFi) microcontroller. Although the example of FIG. 2B shows separate battery supplies, in other examples, a single power connector socket may be provided for both the hard hat 200 and the glasses 250, and in some examples, a single rechargeable battery unit may be provided for powering both sets of electronic circuitry. Again, if the eye-tracking hardware is not provided, the augmented reality glasses 250 may have a similar construction without eye-tracking devices 258a, 258b.

The present example of FIGS. 2A and 2B differs from the corresponding examples of WO2019/048866 A1 in that the headset also comprises a camera 260 that is mounted on the helmet 201 and, in this example, faces forward in line with the gaze of the user. Although one camera is shown, there may be one or more (or additional) camera devices that capture image data from one or more of the sides and the back of the helmet 201. The mounting shown in FIG. 2A is simply illustrative. For the methods described below, the camera 260 may be a relatively cheap, low-resolution grayscale device with a relatively low sampling frequency. In certain cases, the camera 260 may have dual functionality, for example being used for the methods described below and being used to implement a positioning system for tracking the headset. In this case, for example, the camera 260 may form part of a SLAM system for tracking the headset. Such a SLAM system may be used in a stand-alone manner and/or as a further positioning system in addition to the positioning system described with reference to FIGS. 1A to 2B. As such, although the camera 260 may be a relatively low specification device in certain examples, it may also comprise any one of a greyscale video camera, a Red-Green-Blue (RGB) video camera, an RGB and Depth (RGB-D) video camera, an event camera or any form of camera as discussed above. The camera 260 may also comprise a single monocular video camera or form part of a plurality of stereo cameras.

In FIG. 2B, the camera 260 is communicatively coupled to the local data bus 209 and is powered by the battery 213. Although in the example of FIG. 2B, the camera 260 forms part of the hard hat 200, in other examples it may form part of a separate module that is communicatively coupled to one or more of the hard hat 200 and the augmented reality glasses 250 (e.g., via a suitable wired or wireless interface such as a Universal Serial Bus - USB - or Bluetooth ®).

The processor 208 is configured to load instructions stored within storage device 211 (and/or other networked storage devices) into memory 210 for execution. A similar process may be performed for processor 268. In use, the execution of instructions, such as machine code and/or compiled computer program code, by one or more of processors 208 and 268 implement the configuration methods as described below. Although the present examples are presented based on certain local processing, it will be understood that functionality may be distributed over a set of local and remote devices in other implementations, for example, by way of network interface 276. The computer program code may be prepared in one or more known languages including bespoke machine or microprocessor code, C, C++ and Python. In use, information may be exchanged between the local data buses 209 and 279 by way of the communication coupling between the dock connectors 215 and 275. It should further be noted that any of the processing described herein may also be distributed across multiple computing devices, e.g. by way of transmissions to and from the network interface 276.

*Marker Configuration*

In examples of the present invention described herein, a 2D marker is used to initialise or configure (i.e. set up) a transformation between a coordinate system used by at least one positioning system (such as the positioning system shown in FIGS. 1A to 2B and/or a SLAM system that may use camera 260 or a different set of devices) and a coordinate system used by the BIM. The methods described herein may replace the calibration tool methods described in WO2019/048866 A1, providing a tool-free and rapid alignment of multiple coordinate systems that improves useability. For example, a user may simply turn on the headset and look around the construction site to align the BIM with a current view of the construction site. Hence, comparative initialisation times of minutes (such as 10-15 minutes) may be further reduced to seconds, providing what appears to be near seamless alignment from power-on to a user. Once the 2D markers are mounted in place and located, e.g. on an early permeant structure such as a column or wall, then they are suitable for configuring the headset over repeated use, such as the period of construction, which may be weeks or months.

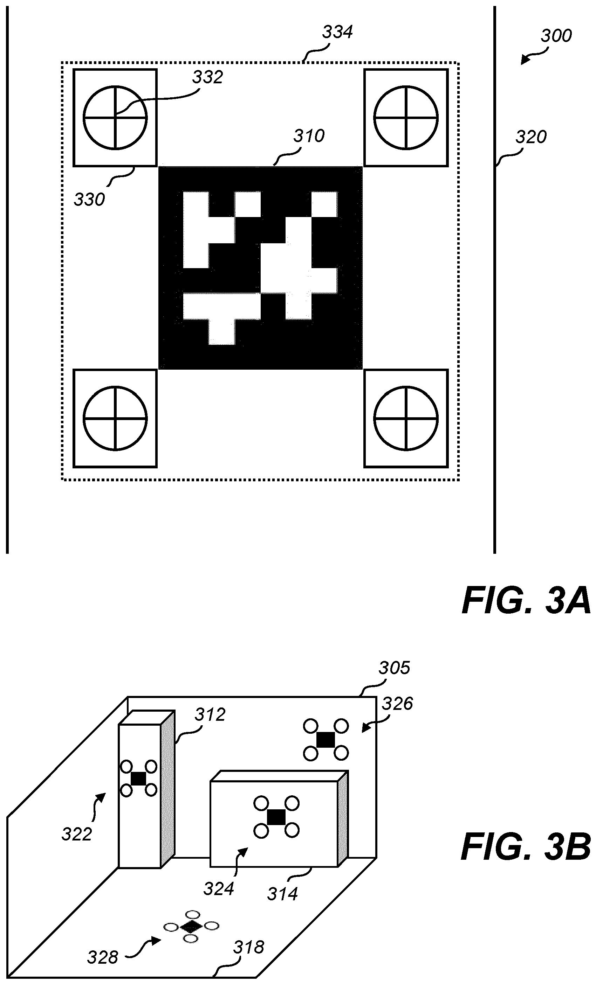

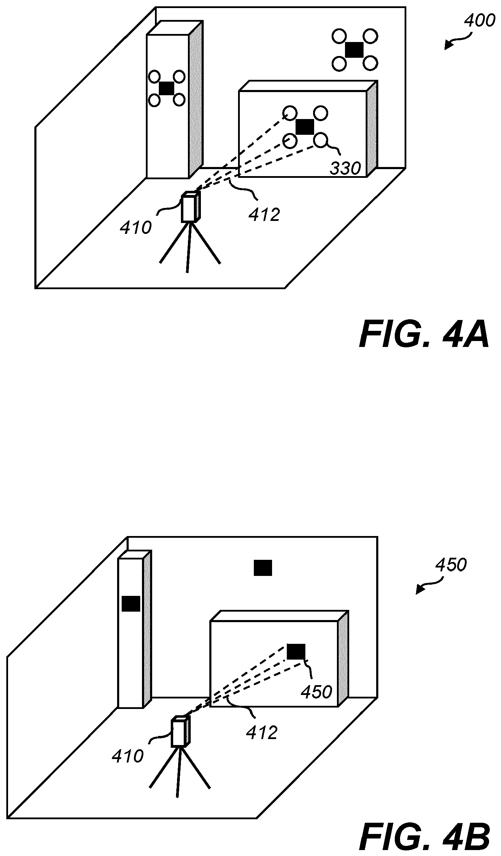

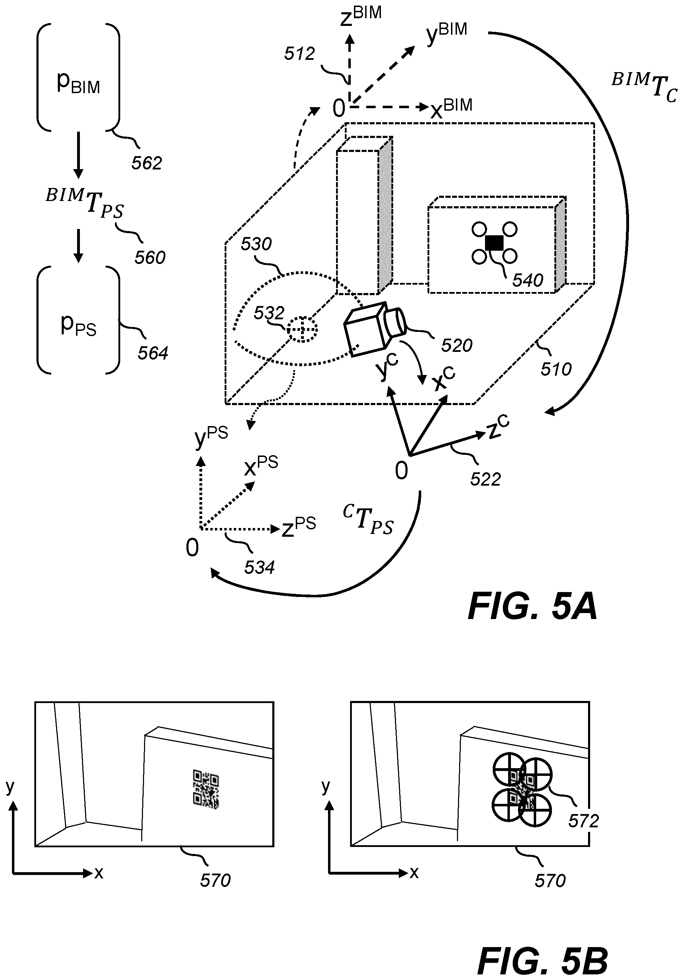

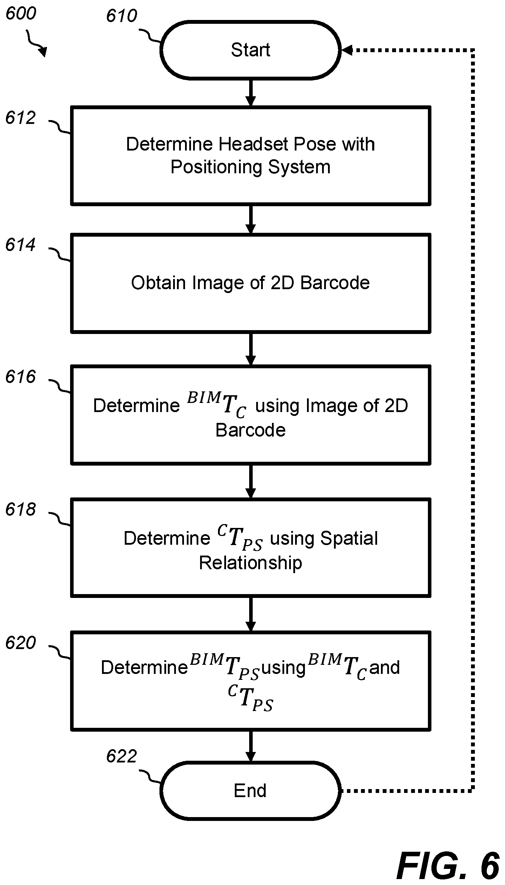

Certain examples of the present invention will now be described with reference to FIGS. 3A to 6. FIGS. 3A to 3F show some example schematic arrangements of 2D markers within the construction site. FIGS. 4A to 4B show one example method of locating the 2D markers. FIG. 5A shows a schematic illustration of how configuration is performed. FIG. 5B shows schematic illustrations of images of the 2D markers that may be obtained, e.g. using camera 260 from FIGS. 2A and 2B. FIG. 6 then shows a flowchart for performing the configuration method. The presently described examples may be performed using the hardware shown in FIGS. 2A and 2B or may alternatively be performed using variations of this hardware, e.g. with headsets that use different positioning systems or a plurality of positioning systems of different types. The presently described examples may be performed in the context of a construction site as described with reference to FIGS. 1A and 1B, with a BIM being aligned as shown in FIG. 1B, although in certain cases beacon devices 102 may be omitted (e.g., replaced with a positioning system using sensor devices solely incorporated within the headset) or modified (e.g., may comprise camera devices for detection of active or passive markers).

FIGS. 3A to 3F show some example schematic arrangements of 2D markers within the construction site. These configurations are non-limiting and simply indicate some of the options that are possible with respect to marker placement. The 2D markers and control markers described in these examples may be configured as described above.

FIG. 3A shows a first example 300 of a 2D marker 310 that is mounted on a planar surface 320 within the construction site. The 2D marker 310 is surrounded by control markers 330 that comprise a target 332 for optical distance measurements. In the example of FIG. 3A, the control markers 330 are located such that the corners of the 2D marker 310 are visible but where there is a known distance between the target 332 location and the corner (e.g., in this case set by the fixed dimensions of the control marker 330). FIG. 3B shows how the example 300 may be located within a construction site. In FIG. 3B the construction site is an internal room 305, but in other examples the construction site may be an exterior area. In general, the 2D markers may be placed within any area of the construction site. FIG. 3B shows two structures within the room 305: a column 312 and a wall 314. There is also a floor 318. These are provided as an example and any form of structure may be used for the placement of markers, including ceilings and others. The 2D maker 310 and the control markers 320 are shown affixed to the column 312 at location 322 and to the wall 314 at location 324. They may also be affixed to walls of the room 305 as shown by location 326 or floors or ceilings as shown by location 328 on floor 318. Each area in the construction site may have one or more sets of 2D marker arrangements as shown. At a minimum, one such arrangement is positioned within each area. In this example, the 2D marker comprises an ArUco marker, but any form of marker may be used as described above. In certain cases, the 2D marker 310 and the control markers 330 may form part of a combined calibration marker 334, e.g. that is supplied as a single adhesive sticker with the 2D marker 310 and the control markers 330 being in a fixed spatial relationship.

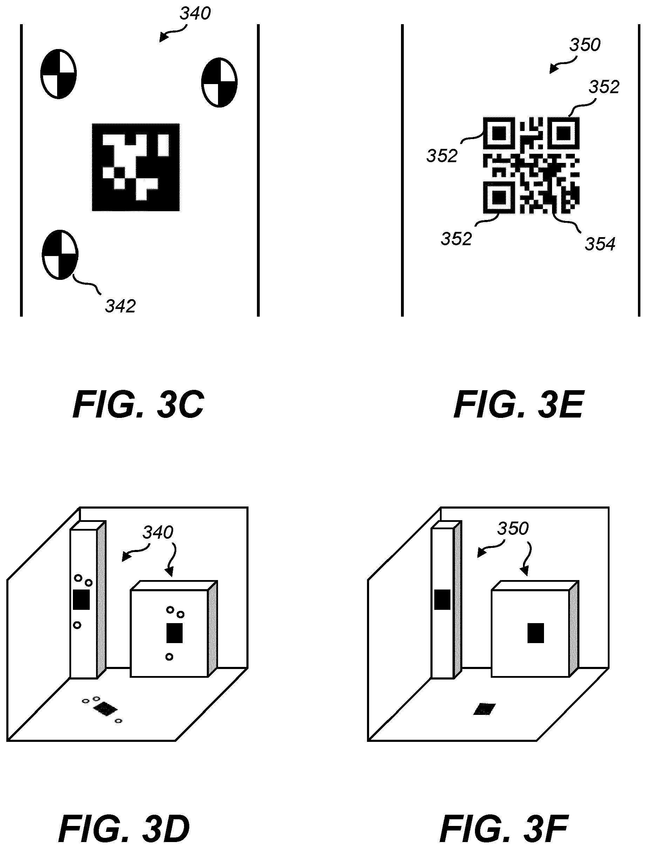

FIGS. 3C and 3D show one alternative arrangement 340 to that shown in FIGS. 3A and 3B. The alternative arrangement 340 has a different form of 2D marker, namely an AprilTag and a different form of control marker. In this case, the control markers 342 comprise a two-tone checker-board pattern that results in accurate optical measurements, e.g. using laser-based distance measurements. The example of FIGS. 3C and 3D also shows a different number of control markers in use. In a preferred example, at least three control markers are placed around the 2D marker to allow at least three corresponding points on the 2D marker to be located (e.g., at least three corners). At least three control markers may be suitable for a case where reflection invariance is not a concern; in other examples, at least four control markers such as is shown in FIG. 3A may be preferred for robust location and subsequent transformation accuracy.

FIGS. 3E and 3F show a further alternative arrangement 350 where the control markers may be incorporated into the design of the 2D marker. In this case, the portions 352 of the 2D marker 354 are used for optical distance measurements without separate control markers. For example, certain control markers used in surveying comprise a circular or square two-tone checkerboard pattern, such as control markers 342 in FIG. 3C. These patterns may be incorporated into the pattern of the 2D marker to form a combined control and alignment marker. For example, optical distance measurements as described below may be performed with respect to the portions 352 and an internal portion of the 2D marker may be used for the alignment methods described below. The example of FIG. 3E may be preferred for simplicity (e.g., single markers may be generated and affixed as shown in FIG. 3F) but the examples of FIGS. 3A and 3C may provide better backward compatibility with existing surveyance.

*Measuring Marker Position*

FIGS. 4A and 4B show how the position of the 2D marker with respect to a BIM may be determined. The procedure shown in FIGS. 4A and 4B may form part of an existing surveying procedure that is performed on the construction site. FIG. 4A shows a measurement for the example 300 of FIG. 3A and FIG. 4B shows a measurement for the example 350 of FIG. 3E. The examples of FIGS. 4A and 4B may be suitable adapted for other examples of 2D markers and control markers.

In general, FIGS. 4A and 4B define a method of placing and using 2D markers. In a first operation, a 2D marker is placed within the construction site. The 2D marker may be placed in an approximate position, e.g. on a useful planar surface such as a wall or on a structure such as a column, or in any arbitrary position. It is not required for the pose of the 2D marker to be known (i.e., its position and orientation with respect to the physical construction site may be unknown or not known exactly). This means that no special care needs to be taken to position the 2D marker in a specific place. Nor is it required that a structure of placement is in an exact position. In a second operation, a plurality of locations disposed in relation to the two-dimensional marker are measured using surveying equipment. The surveying equipment may be a total station, laser scanner or theodolite. The surveying equipment may comprise conventional surveying equipment with no special adaptations. The result of the measurement is a set of measured location data for the plurality of locations. The plurality of locations may each comprise the location of a centre point of a specific total station marker or registration symbol. Following measurement, the 2D marker is detected using a camera of an electronic device. The electronic device may comprise a headset as described herein (e.g., an augmented reality head mounted display - AR HMD). Following detection, a virtual representation of the detected 2D marker is determined with respect to the electronic device within a 3D space. For example, this may comprise determining the plane or polygon forming the 2D marker in a 3D space defined with respect to the camera (or the electronic device). Determining a virtual representation may comprise determining 3D coordinates within the 3D space of at least three points on the 2D marker (e.g., the 3D coordinate of each corner of the 2D marker). Given the virtual representation, the measured location data for the plurality of locations may be correlated with a plurality of points defined with respect to the virtual representation of the 2D marker to determine a mapping between the three-dimensional space and the construction site. For example, this may comprise determining the transformation between the BIM space (i.e., BIM coordinate system) and one or more of the camera space (i.e., camera coordinate system) and a positioning system space (i.e., positioning system coordinate system). The plurality of points defined with respect to the virtual representation of the 2D marker may be corners of the 2D marker, or points where the total station markers are placed, which are predefined or measured in relation to the 2D marker. This process will now be described in more detail with reference to the examples of FIGS. 4A and 4B.

In FIG. 4A, the locations of control markers 330 are measured 412 using a total station 410. The total station 410 is an optical instrument used for surveying and building construction. Although use of a total station 410 is described other suitable location equipment may also be used, including other forms of theodolite and distance measuring equipment. In the present example, the total station 410 comprises an electronic transit theodolite with an integrated electronic distance measurement device to measure vertical and horizontal angles and a slope distance from a measured point. The total station 410 may use an infra-red laser for the electronic distance measurement. The total station 410 may measure the coordinates of the control markers 330 within a geodetic coordinate system or with reference to a predefined local coordinate system, such as a site coordinate system with a predefined origin within the construction site. These coordinate systems may be the same coordinate systems used by the BIM. In the latter case, the predefined local coordinate system may be mapped back to a geodetic coordinate system, e.g. the predefined origin may be located at a known latitude and longitude. The coordinates of the control markers 330 may be defined in terms of latitude and longitude (e.g., in relation to a global coordinate system) and an elevation or in terms of a northing - N - and Easting - E - and an elevation (e.g., with respect to a predefined map or cartography system). In one case, the total station 410 has line of site to a further point with a known location within the construction site, and so determines the location of the control markers 330 using known surveying approaches (e.g., by way of trigonometry and triangulation). In another case, the total station 410 may comprise a high accuracy global positioning system (GPS) receiver. In yet another case, the total station 410 may comprise a LIDAR sensor to determine a point cloud location and/or capture a point cloud.

FIG. 4B shows a similar measurement operation 412 for a 2D marker 450 without separate control markers. In one case, a 2D marker similar to the 2D marker 350 in FIG. 3E may be used and the total station 410 may measure the location of the corners 352. In another case, a 2D marker similar to the 2D marker 310 in FIG. 3A may be used and the total station 410 may be configured to measure the corner location, e.g. based on differences in black and white tones.

The measurement 412 shown in FIG. 4A and 4B may be performed as part of an initial setup phase. For example, structures such as columns 312 and walls 314 may be surveyed as part of a normal construction process (e.g., following an initial construction but before further interior construction and finishing) and this may be used to obtain measurement of the locations of one or more of a set of control markers surrounding the 2D marker and the 2D marker itself. The locations of the set of control markers surrounding the 2D marker and/or the 2D marker itself may be obtained in a coordinate system that is also used to define the BIM, such as a global coordinate system or a site-specific coordinate system. As such, the location of the 2D marker may be accurately defined in three dimensions with respect to the BIM. In the case that the control markers are measured, the location of the corners of the 2D marker may be determined based on known (or measured) relative positioning of the control markers with respect to the 2D marker. In one case, known dimensions of one or more of the 2D markers and the control markers (such as known widths and heights) may be used to derive coordinates of the 2D marker with respect to the BIM based on measurement similar to that shown in FIGS. 4A and 4B. The location of the 2D marker with respect to the BIM may be stored as part of the BIM or as data separate from the BIM (e.g., in the form of a coordinate of at least one corner and 2D orientation or multiple corner locations).

This process has benefits when compared to comparative processes. For example, in comparative approaches, 2D markers are first placed in the BIM (e.g., set at particular 3D coordinates in the BIM) and are then placed in a corresponding location on a construction site. However, one problem is that the placement typically depends on structures within the construction site precisely matching their counterparts in the BIM. This is often not the case.

For example, a 2D marker position may be defined as 1m from the ground on a particular column (e.g., in the centre of the column). In comparative methods, this may be defined in the BIM and the BIM is then used to direct personnel in the construction site to go to the corresponding location with the column and place the 2D marker in the centre of the column, 1m from the ground. In these comparative methods, the 2D marker is assumed to be at the BIM-defined location, such that when viewed with an AR device, the viewed 2D marker is set to that BIM-defined location and the viewing of AR images are calibrated based on that correspondence. However, this assumption often does not hold. For example, the column may not be in the correct location, the column may not be plum, the column may be built out of level in any direction, and/or the ground may not be at the BIM-stated level. This is especially the case when millimetre accuracy is required, as different misalignments that are typically not perceived by a user placing the 2D marker, may lead to the 2D marker being millimetres or centimetres out from the BIM-defined position. In cases such as US 2016/292918 A1, the 2D marker is used as the "ground truth" position for the AR visualisation, and so the lack of accurate placement causes the AR visualisation to be inaccurate. This makes it difficult to access millimetre or centimetre tolerances, such as with an AR headset.

In contrast, the method described above allows an AR model to be accurately viewed, e.g. in the build phase of construction to determine correct placement of structures. In the present method, a position and orientation (e.g., a six-degrees-of-freedom - 6DOF pose) of a 2D marker may be determined in at least two different coordinate systems: a camera and/or tracking coordinate system and an extrinsic coordinate system that is the coordinate system of a BIM. This then means that a mapping or transformation between the two coordinate systems may be determined such that the pose of the 2D marker with respect to the construction site is known. The mapping or transformation may then be using for accurate tracking of an electronic device such as a headset even when the 2D marker is not visible with the camera.

In one set of examples, the plurality of locations that are measured with the surveying equipment comprises at least three locations. This allows for robust mappings to be determined that take into account the scale of each 3D space. The plurality of locations disposed in relation to the two-dimensional marker may comprise total station markers that are positioned a fixed or measured distance from defined points on the 2D marker. In one case, a combined calibration marker may be supplied, e.g. as a single sticker, that comprises a 2D marker for computer vision and total station markers for surveying. In this case, the fixed relation between the computer vision 2D marker and the total station markers are fixed (e.g., as a printout on an adhesive sheet) and so the combined calibration marker may be easily placed. The two-dimensional computer vision marker allows determination of a six-degrees-of-freedom pose of the two-dimensional marker with respect to an observing camera device and a plurality of surveying markers allow determination of three-dimensional locations of at least one point on each of the surveying markers with respect to a surveying device, the surveying device being in turn at a known pose in the construction site.

In the present examples, the measurement by the surveying equipment may be performed as part of a planned scheduled surveying of the construction site (e.g., at periodic times or milestones for construction). Hence, the 2D markers (or the combined markers) may be placed as part of that process yet retained for subsequent calibration of an augmented reality view of the construction site.

In certain cases, the plurality of locations disposed in relation to the two-dimensional marker comprise total station markers that are incorporated into the two-dimensional marker. The total station markers may be positioned with respect to corners of the two-dimensional marker prior to said measuring, incorporated into the two-dimensional marker or on a single adhesive sheet with the two-dimensional marker.

According to the invention, In certain cases, the method described in this section comprises determining a pose of the electronic device using a positioning system, the positioning system comprising a set of sensor devices communicatively coupled to the electronic device, the positioning system determining the pose of the electronic device independently of the two-dimensional marker, wherein the virtual representation of the two-dimensional marker is determined with respect to a coordinate system of the positioning system and the mapping between the three-dimensional space and the construction site is used to calibrate the positioning system. Hence, the other methods described herein of configuring a headset may use the methods in this section as a "setup" phase.

In certain cases, the set of sensor devices are in addition to the camera of the electronic device. For example, the set of sensor devices may relate to a positioning system and the camera may be used for calibration of that positioning system. The camera may thus be a simple low-resolution device. In other cases, the camera is used to track the electronic device using SLAM methods and thus the 2D marker calibration is used to calibrate the SLAM tracking.

In certain cases, the method may comprise undistorting an image of the detected two-dimensional marker to determine the virtual representation. For example, the two-dimensional marker may be detected in image data such as a captured image and/or one or more frames of captured video, and then undistorted based on known camera or image capture device parameters, such as intrinsic camera parameters. These intrinsic camera parameters may comprise one or more of: focal length of a camera lens in one or more of x and y directions, an optical centre of the image capture sensor and a set of distortion coefficients. Undistorting an image of the detected two-dimensional marker may comprise correcting for radial and/or tangential distortions introduced by the camera lens. Note that the use of the term "intrinsic" here differs from use of the term "intrinsic" in describing the discussed intrinsic coordinate system; it instead refers to camera-specific parameters.

In certain cases, the detected two-dimensional marker may comprise a plurality of sub-markers, each sub-marker being detectable as a two-dimensional marker as described above. A plurality of sub-markers may then be detected and processed as described herein and an estimate of a camera pose determined based the ensemble of detected sub-markers. This may improve accuracy in certain applications.

In certain cases, the method in this section may comprise one or more of: retrieving the measured location data based on data read from the two-dimensional marker; receiving the measured location data at the electronic device over a communications link; and entering the measured location data into a user interface of the electronic device. For example, a user may obtain the measured location data from an offline source (such as a surveying record) and enter these into the electronic device (e.g., via a touchscreen or voice commands) or a code within the 2D marker (e.g., a unique identifier) may be decoded via the camera capture and used to look up the measured location data in a communicatively coupled database (e.g., that is pre-populated following an earlier survey). The mapping may used to align a building information model (BIM) with a position and orientation of the electronic device, e.g. a headset as described herein featuring an augmented reality head-mounted display, where the mapping is used to display a virtual view of the BIM that is aligned with the position and orientation of the electronic device within the augmented reality head-mounted display.

*Aligning Coordinate Systems Using Marker Locations*

FIG. 5A shows schematic how a set of one or more 2D markers may be used to determine a BIM-to-positioning transformation that maps between a coordinate system used by the BIM and a coordinate system used by the headset positioning system. This transformation may then be used to map BIM data to the coordinate system used by a headset positioning system so as to render a virtual image of the BIM relative to the pose of the headset on a head-mounted display. For example, the pose of the headset is determined by the headset positioning system within the coordinate system used by the headset positioning system. Objects within the BIM, or more precisely within the coordinate system used by the BIM, such as the locations of structures, points and other geometric features, need to be mapped to the coordinate system of the headset positioning system such that these objects may be correctly aligned within that latter coordinate system and then projected onto the display devices 255a, 255b of the augmented reality glasses 250. The illustrated process may be performed by one or more processing units installed within the headset (e.g., PCUs 208 and/or 268 in FIG. 2B) and may incorporate distributed or server based processing where measurements and results are communicated between a remote device and the headset.

FIG. 5A shows at least a portion of a BIM 510 that represents a physical area of the construction site. For ease of explanation, this will be referred to as the BIM 510 but in certain implementations it may comprise a portion of a larger BIM. For example, the BIM 510 may be a portion of a larger model associated with the rooms shown in any of FIGS. 3B, 3D, 3F, 4A, and 4B. The BIM may have multiple layers, e.g. representing different parts of construction or services, as is known in the art. A dashed line is used to indicate that what is shown is a modelled representation of the physical area, e.g. a Computer Aided Design - CAD - representation, rather than the physical area itself. The BIM 510 is defined with reference to a coordinate system for the BIM 512. In this example, the BIM is a 3D model and so points, surfaces and other geometric structures may be defined with reference to three orthogonal directions (e.g., $x^{BIM}$, $y^{BIM}$ and $z^{BIM}$). The coordinate system for the BIM 512 has an origin (indicated by "0" in FIG. 5A), which is a reference point for values along each orthogonal direction. The origin for the BIM 512 may comprise a known geodetic coordinate (such as a precise latitude, longitude and elevation) and a known orientation (e.g., an angle normal to a tangent of the Earth at a particular latitude and longitude). For room size area, curvature effects of the Earth may be ignored. The BIM 512 may have an origin that is set per area of the construction site for a displayed portion of the model, i.e. may comprise an origin for a particular room, or may have a construction site origin, where a corner of a particular area is defined with reference to that construction site origin. The BIM 512 may have a millimetre resolution. As is known in the art, the coordinate system may be configured with a predefined chirality or handedness. In general, all the coordinate systems described herein are configured with a shared or common handedness, e.g. with a default right handed cartesian coordinate system. The chirality of one or more coordinate system may be hard-set or set via configuration data.

FIG. 5A also shows a camera 520 that is coupled to a headset 530. The camera 520 may comprise the camera 260 in FIGS. 2A and 2B or may comprise a different camera. The headset 530 may comprise the hard hat 200 shown in FIGS. 2A and 2B or may comprise a different headset. The headset 530 is worn by a user as they navigate the physical space. As the headset 530 is worn by a user, the camera 520 may have an unknown position and orientation, i.e., an unknown pose, within the physical space; however, as the camera 520 is coupled (e.g. rigidly) to the headset, the pose of the camera 520 with respect to the positioning system is knowable. The methods described herein use this link to connect a determined pose of the camera with respect to the 2D marker to a determined pose of the camera with respect to the positioning system. The pose of the camera 520 may be modelled as a separate camera-centric coordinate system 522 that has an origin at the camera location. For example, the camera 520 may be modelled as a pinhole camera and the location of the pin-hole in this model may be seen as an origin of the camera-centric coordinate system 522. Like the BIM coordinate system 512, the camera-centric coordinate system 522 may be defined based on three orthogonal directions (e.g., $x^C$, $y^C$ and $z^C$). The camera-centric coordinate system 522 defines the respectively dimensions (e.g., $x$ and $y$) of an image captured by the camera 520. This is shown by image 570 in FIG. 5B. It should be noted that the location of the axes in FIGS. 5A and 5B is for example only, e.g. an image origin may be defined with reference to any corner of the image or a centre point of the image. In this case, the $z^C$ dimension of the camera-centric coordinate system 522 represents a depth normal to the camera 520.

As described with reference to FIGS. 1A to 2B, the headset 530 is equipped with a positioning system to track the location of the headset 530 within the physical area. In the present example, a location of the headset 530 is defined with reference to a centre-point of the headset, shown as 532 in FIG. 5A. Although a centre-point is specified in this example, those skilled in the art will understand that this point need not be in the centre of the headset, but does need to be in a fixed position relative to the physical dimensions of the headset (e.g., it could be a front, top or side location). The centre-point 532 is located within a positioning coordinate system 534 used by a positioning system for the headset 530. For example, the positioning system may comprise the positioning system shown in FIGS. 1A to 2B or comprise a SLAM-based positioning system. The SLAM-based positioning system may use camera 520, an IMU such as 218 and/or may use a different set of camera devices. For a positioning system that uses external base stations within a defined tracked volume, an origin of the positioning coordinate system 534 may initially be defined with respect to one of those base stations (e.g., representing a corner of the room as defined with respect to the external base station). This initial origin may then be mapped to a defined point on the headset using a pose of the headset as determining by the positioning system, such that the defined point may function as the origin of the positioning coordinate system 534. For example, the position of the base station origin may be defined with respect to a headset origin using the inverse of the pose of the headset with respect to that base station origin (e.g., considering just translation for ease of example, a headset centre-point positioned at (5, 3, -2) from a corner point may be set as (0, 0, 0) with the corner point set as (-5, -3, 2)). For a positioning system that uses sensor devices that are only mounted upon or within the headset, the origin of the positioning coordinate system 534 may be defined with reference to an arbitrary starting point for navigation (e.g., a location where the user first switched on the headset or acquired an image of the 2D marker). Again, the positioning coordinate system 534 may be defined based on three orthogonal directions (e.g., $x^{PS}$, $y^{PS}$ and $z^{PS}$). The resolution of the measurements within the positioning coordinate system 534 may depend on the positioning system that is being used, but will typically use millimetre or centimetre precision. In one case, a location of the centre-point 532 of the headset may be denoted using a floating-point triple that may be mapped onto real-world distances using a predefined conversion function. An orientation of the headset 530 may also be defined by a normal vector at the centre-point 532 and/or using quaternions. In the latter case, dual quaternions may provide a way to represent location and orientation. A dual quaternion coordinate may be mapped to a location and orientation. In this manner, a pose of the headset 530 with respect to the positioning coordinate system 534 may be defined with six-degrees-of-freedom (6DOF) representing location (in three dimensions) and orientation (in three dimensions).

One problem faced when navigating the physical space modelled in FIG. 5A is that there are effectively four difference reference systems: 1) the physical space itself; 2) the BIM of the physical space; 3) the camera; and 4) the positioning system. If there are multiple positioning systems being used to locate the headset, then this further increases the number of differing reference systems. A user wearing the headset 530 and viewing an augmented reality display such as augmented reality glasses 250 needs to view the BIM 512 aligned to the current pose of the headset 530, i.e. positions and orientations within the BIM coordinate system 512 need to be mapped to the positioning coordinate system 534. This may be performed by a point-to-point transformation 560, as shown on the left-hand side of FIG. 5A. This transformation 560 may be implemented as a 4 by 4 matrix transformation with rotation and translation terms:

$$T_{PS}^{BIM} = \begin{bmatrix} R & t \\ 0^T & 1 \end{bmatrix}$$

where **R** is a 3 by 3 rotation matrix and **t** is a 3 by 1 translation vector. Alternatively, the transformation 560 may be implemented as separate rotation and translation transformations. This transformation matrix may thus define the relative rotation and translation between the origins of the coordinate systems for the BIM and the positioning system. To transform points, a 4x1 vector may be defined based on a point location within the BIM coordinate system (e.g., $p_{BIM}$) 562 with an additional unit element, e.g. [$x^{BIM}$, $y^{BIM}$, $z^{BIM}$, 1], thus allowing a transformation via matrix-vector multiplication (e.g., a dot product), where the first three elements of a resultant 4x1 vector are taken as the new position (e.g., $p_{PS}$) in the positioning system coordinate system 564 (e.g., [$x^{PS}$, $y^{PS}$, $z^{PS}$, _]). Alternatively, quaternions may be used to represent orientations as 4D coordinates. Three dimensional geometric transformations using matrices are known in the art and may be implemented rapidly using known graphical processing units (as well as standard central processing units).

In the present example, the parameters of the point-to-point transformation 560 are determined by way of the camera 520, in particular using images where a 2D marker 540 is visible. In use, once the headset 530 is switched on, the camera 520 begins acquiring images of the surrounding physical space. When a user looks in the direction of the 2D marker 540, an image 570 featuring the marker is obtained as shown in FIG. 5B. Images may be acquired automatically, e.g. a background service may monitor sampled frames of a video feed, and/or may be acquired at the command of the user. The 2D marker 540 may be any 2D marker as described herein. The image 570 is then supplied to a camera pose determination function that estimates a pose of the camera with respect to the 2D marker 540, i.e. determines a position and orientation of the camera with respect to the 2D marker. The camera pose determination function may use a pose determination function from a known computer vision software library, such as the *detectMarkers* or *estimatePoseSingleMarker* function provided as part of a library of functions for use with ArUco markers, or the *solvePnP* function provided by the OpenCV library of functions. Custom pose determination functions may also be programmed and/or embodied in hardware such as Field Programmable Gate Arrays, e.g. based on known approaches. In certain cases, known matrix inverse functions may be used to determine the pose of the camera 520, in particular the pose of the camera origin, with respect to the 2D marker 540, if available functions determine the pose of the 2D marker 540 with respect to the camera 520. Many camera-pose determination functions first determine corner locations of the 2D marker as shown within the image 570. For example, this may involve application of a corner detection function using a known corner detection algorithm, such as the Harris corner detection algorithm. The right-hand side of FIG. 5B shows the locations of the corners of the 2D marker 572 being detected in the image 570. An output of a corner detection function may comprise two dimensional coordinates (e.g., with respect to the x and y image dimensions shown in FIG. 5B and measured in pixel units) of any detected corners. These may be used by a marker detection function, e.g. together with defined properties of the 2D marker 540, such as known spatial dimensions (i.e. positions of the corners with respect to each other in millimetres). In certain cases, the camera-pose determination function also uses predefined camera properties, such as focal length and/or distortions. These may be stored as configuration data accessible within the headset.

Via the measurement shown in FIGS. 4A and 4B, or via accurate placement of the 2D marker 540, the location of the 2D marker (e.g., the location of the corners of the 2D marker) with respect to the BIM coordinate system is known. As such, the pose of camera 520 with respect to the 2D marker 540 may be used to determine the pose of the camera 520 with respect to the BIM coordinate system 512. This enables a BIM-to-camera transformation from the origin of the BIM coordinate system 512 to the camera-centric coordinate system 522 , $^{BIM}T_C$, to be determined (i.e., the translation element of this transformation is the location of the camera origin with respect to the BIM origin and the rotation element is determined based on the orientation of at least one of the orthogonal dimensions of the camera-centric coordinate system). For example, via measurement or accurate placement, the location of the corners of the 2D marker 540 are defined within the BIM coordinate system 512 and via the camera-pose determination function the location of the same corners may be estimated within the camera-centric coordinate system 522. Thus comparing at least three of the corners (and preferably four) allows the BIM-to-camera transformation, $^{BIM}T_C$, to be determined. In certain cases, a camera calibration may also be performed, e.g. applying and/or determining intrinsic camera parameters such as focal length (which may be known for a particular camera) and lens distortion. From this camera calibration, or as retrieved from an earlier calibration or specification, an intrinsic camera matrix may be defined. The intrinsic camera matrix may be used together with an extrinsic camera matrix that defines the rotation and translation of the marker with respect to the camera. Note that the use of the term "intrinsic" here differs from use of the term "intrinsic" in describing the discussed intrinsic coordinate system; here it instead refers to camera-specific parameters.

It should be noted that the process described herein is flexible with regard to whether a camera-to-BIM transformation or a BIM-to-camera transformation is determined. For example, certain camera pose determination functions may output a camera-to-BIM transformation, $^{C}T_{BIM}$, which may be converted into a BIM-to-camera transformation by taking the inverse of the transformation matrix, i.e. $^{BIM}T_C = (^{C}T_{BIM})^{-1}$. Similarly, different camera pose determination functions may be applied to determine translation and rotation components of the transformation. In certain cases, a multiple camera system may be used (i.e., more than one camera supplying image data). This multiple camera system may camera a stereo camera system. In this case, the multiple camera system may be used to determine depth, e.g. of one or more points on the marker. This may provide more accurate marker detection and increased transformation accuracy.

In one case, a BIM-to-camera transformation may be determined by determining a marker-to-camera transformation, $^{M}T_C$, which may be output by a camera pose determination function, and a BIM-to-marker transformation, $^{BIM}T_M$, e.g. $^{BIM}T_C = {}^{BIM}T_M \cdot {}^{M}T_C$. Here, the BIM-to-marker transformation, $^{BIM}T_M$, may be determined based on the location of the marker within the BIM coordinate system 512, e.g. as measured using a total stations as described with reference to Figures 4A and 4B. The marker-to-camera transformation, $^{M}T_C$, may be composed of the product of the intrinsic camera matrix and the extrinsic camera matrix.

Following, or in parallel with, the determination of the BIM-to-camera transformation, $^{BIM}T_C$, based on the location of the 2D marker 540 within the image 570, a camera-to-positioning transformation $^{C}T_{PS}$ is also determined between the origin of the camera-centric coordinate system 522 and the origin of the positioning coordinate system 534 used by the positioning system. This then allows a position and orientation defined within the camera-centric coordinate system 522, i.e. in relation to the camera, to be mapped to a position and orientation defined within the positioning coordinate system 534, i.e. in relation to the pose representation used by the positioning system. In the present examples, the camera-to-positioning transformation $^{C}T_{PS}$ is determined based on a specification of the spatial relationship between the headset 530 and the camera 520, e.g. based on a known rigid coupling between the two, where the camera is worn by a user and moves with the headset. This spatial relationship may be based on a defined offset between the centre-point 532 and the camera 520, e.g. a defined offset and a position on the camera 520 that is deemed to be the "pin hole" point and thus the origin of the camera-centric coordinate system. The specification of the spatial relationship may be based on a manufacturing specification, such as a CAD design for the hard hat 200, and/or known dimensions of the camera 520. The camera-to-positioning transformation $^{C}T_{PS}$ may thus be defined as part of configuration data for the headset 530. In certain cases, the headset 530 may be designed such that the camera 520 is rigidly mounted with the three orthogonal dimensions of the camera-centric coordinate system being parallel to the three orthogonal dimensions of the positioning coordinate system (e.g., the lens of the camera 520 may be aligned to be parallel to a front-to-back axis of the hard hat 200 as shown in FIG. 2A). In this case, the camera-to-positioning transformation $^{C}T_{PS}$ only has translation terms. In the case shown in FIG. 2A, there may only be a depth and height offset (e.g., in the $y^{PS}$ and $z^{PS}$ dimensions) and in other cases there may just be a depth offset. Via accurate mounting of the camera 520, millimetre accuracy may be ensured.

In certain variations, the camera-to-positioning transformation, $^{C}T_{PS}$, may be determined via computer vision processing methods. For example, there may be noise in the positioning system and in the image acquisition via the camera 520. However, over time and multiple images, and by correlating image information obtained with the camera 520 and positioning information obtained with the positioning system, the relative position of the camera origin to the centre-point 532 may be determined.

Returning to FIG. 5A, once a BIM-to-camera transformation, $^{BIM}T_{C}$, and camera-to-positioning transformation, $^{C}T_{PS}$, have been determined, these may be used to determine the BIM-to-positioning transformation, $^{BIM}T_{PS}$ as described above. The BIM-to-positioning transformation, $^{BIM}T_{PS}$, may then be computed as the dot product of the two transformations $^{BIM}T_{PS}= {}^{BIM}T_{C} \cdot {}^{C}T_{PS}$.

The process for determining the BIM-to-positioning transformation, $^{BIM}T_{PS}$, may be performed once or repeatedly. In the first case, the process described with reference to FIG. 5A may be performed in response to detecting a 2D marker within an image 570 (or, in a basic case, in response to a user command while facing the 2D marker). In the second case, the process may be performed in the background during movement within the construction site. In this second case, the process may be run in parallel with the positioning system as a separate background service, where the output in the form of a latest version of the BIM-to-positioning transformation, $^{BIM}T_{PS}$, is made available to a model engine that uses said transformation is used to render a virtual image of the building information model relative to the pose of the headset on the head-mounted display. In this second case, the process may be repeated for every 2D marker that is detected so as to iterative compute the BIM-to-positioning transformation. This may involve repeated viewings of the same 2D marker (i.e., where the same marker is captured in different images) and/or viewings of different 2D markers within the construction site (such as the multiple markers shown in FIGS. 3B, 3D and 3F). In both cases, a plurality of estimates for the BIM-to-positioning transformation may be obtained while the headset is tracked with the positioning system. These may be stored and used as part of a bundle optimisation procedure to determine single BIM-to-positioning transformation for use in rendering the BIM. Bundle optimisation may increase the accuracy of the BIM-to-positioning transformation by optimising over a set of noisy measurements, e.g. due to positioning system noise, camera noise or computation inaccuracies. This may happen transparently to both the positioning system and the model engine of the headset. It should be noted that the BIM-to-positioning transformation may be determined via a first calibration process, and the display of an augmented reality version of the BIM may be performed using the BIM-to-positioning transformation in a separate process that operates on frames of captured video without marker detection.

In certain examples, the positioning system forms part of a plurality of positioning systems used by the headset. These may comprise positioning systems of the same type or of different types. The positioning systems may be selected from one or more of the following non-limiting examples: a radio-frequency identifier (RFID) tracking system comprising at least one RFID sensor coupled to the headset; an inside-out positioning system comprising one or more signal-emitting beacon devices external to the headset and one or more receiving sensors coupled to the headset; a global positioning system; a positioning system implemented using a wireless network and one or more network receivers coupled to the headset; and a camera-based simultaneous localisation and mapping (SLAM) system. For example, the headset may use two different SLAM positioning systems, a SLAM positioning system and a RFID positioning system, a RFID positioning system and a WiFi positioning system, or two different tracked volume positioning systems covering overlapping tracked volumes. In these cases, a BIM-to-positioning transformation may be determined for each positioning systems using the same process. For example, each positioning system may have a different coordinate system. In certain cases, a common camera 260 or 520 may be used and so a different defined spatial relationship may be defined and/or computed for each positioning system. The presently described process provides a particularly efficient implementation when multiple positioning systems are used, as the BIM-to-camera transformation only needs to be determined once for the set of multiple positioning systems, e.g. only the camera-to-positioning transformation may differ for each positioning system. As such alignment of multiple positioning systems of a variety of types may take advantage of a single configuration process. This may avoid the need to perform different configuration processes for each positioning system, which may be extremely onerous on the user.

*Method for Configuring a Headset*

FIG. 6 shows a method 600 of configuring a headset for display of a building information model (BIM) at a construction site. The method 600 may be performed to implement the process shown in FIG. 5A. As such, details of the process described with reference to FIG. 5A may also apply to the present method. The method may be used with examples described with respect to FIGS. 1A to 2B, such as the hard hat 200 and augmented reality glasses 250 of FIG. 2A, wherein the electronic circuitry of FIG. 2B such as one or more of the processors 208 and 268 implements the method by executing computer program code. In other cases, the method 600 may be implemented with other or modified hardware. In yet other cases, at least some of the blocks of the method 600 may be performed across a distributed system.

The method 600 starts at block 610. Block 610 may be performed when a user switches on or wears the headset within an environment in which a positioning system tracks the position of the headset. As shown by the dotted line, the method 600 may also be repeated performed during use, wherein the method starts at block 610 for each repetition of the method 600. Then at block 612 a pose of the headset is determined using the positioning system. This may reflect at ongoing tracking of the headset within the environment using the positioning system. For example, block 612 may be performed by accessing a pose of the headset that is continuously or periodically updated by the positioning system. The positioning system comprises a set of sensor devices coupled to the headset, and may comprise any known positioning system including those described here (e.g., SLAM systems, beacon-based systems, marker tracking systems etc.). The positioning system determines the pose of the headset with respect to an origin of a coordinate system used by the positioning system. For example, the positioning system may represent a volume where the headset is being tracked as a 3D volume with a predefined origin. As described above, the predefined origin may be set at a location where the headset was initialised (e.g., the pose at block 610) or may be set with reference to a sensor device within the volume, e.g. with respect to a given base station 102 as shown in FIG. 1A.

The pose of the headset may comprise a location as a 3D coordinate and an orientation, or be defined via a dual quaternion coordinate. The orientation may be defined by a normal vector in the coordinate system of the positioning system, a set of angles with respect to axes within the coordinate system, and/or via a quaternion coordinate. Although examples are described with respect to six-degrees-of-freedom (e.g. a location and orientation defined by six variables), certain degrees of freedom may be fixed in certain implementations (e.g., there may only be three-degrees-of-freedom and/or certain movements may be restricted).

At block 614, an image is obtained of a 2D marker positioned within the construction site. The image may be obtained by a camera coupled to the headset as a user looks around the construction site. The 2D marker is positioned with respect to defined positions within a coordinate system of the building information model. For example, the 2D marker may be affixed to a planar surface of the construction site and its position measured as shown in FIGS. 4A or 4B (e.g., via the measurement of control markers or otherwise). Hence, the defined positions may comprise positions that are derived from measurements after the 2D marker is affixed. In other cases, the 2D marker may be located at a measured position from a known location in the construction site. For example, a corner of a room or other structure may have a defined position within geodetic coordinates (e.g., a defined latitude, longitude and elevation) that is measured as part of the construction process; in this case, one or more 2D markers may be accurately positioned with respect to this defined position. In general, the measurement methods of FIGS. 4A and 4B are preferred for greater accuracy.

At block 616, a BIM-to-camera transformation is determined. This represents a transformation (e.g., represented as a set of rotation and translation terms) between an origin of a coordinate system used by the BIM and an origin of the coordinate system of the camera. The determination is based on a location of the two-dimensional marker within the image. For example, the image may be provided as input to a camera-pose determination function. This may determine, e.g. via optimisation such as least mean square methods, a transformation based on feature locations within the image and known positions of those features. For example, the features may comprise corners which may be detected within the image and then mapped to specified positions of those same corners within the BIM, e.g. as defined by the measurement of the corner locations and/or the known dimensions of the 2D marker. This transformation may be used to determine the BIM-to-camera transformation. Different methods may be applied in different implementations. In certain cases, mapping between the camera and BIM space in both directions may be performed by first determining a transformation in a first dimension as a 4 by 4 matrix or such like (e.g., separate rotation and translation matrices) and then finding the inverse of this matrix (e.g., using fast matrix inverse methods such as Singular Value Decomposition). The BIM-to-camera transformation enables the position and orientation of the camera origin with respect to the BIM coordinate system to be known. As described above, a BIM-to-camera transformation may be determined directly, or by taking the inverse of a camera-to-BIM transformation. It should be noted that in examples described herein the camera operates independently of the positioning system, i.e. the 2D marker is not used by the positioning system to determine a pose of the headset, rather the positioning system uses an independent set of sensors and/or an independent set of positioning functions. For example, the positioning system may comprise sensors that do not include the camera and/or SLAM methods that use the camera may just use the same acquired frames but be run as independent processes to block 616.

At block 618, a camera-to-positioning transformation is determined. This transformation provides a mapping between the origin of the coordinate system used by the camera and an origin of the coordinate system used by the positioning system. The transformation is based on a specification of the spatial (e.g. rigid) relationship between the headset and the camera. As described above, this may be based on a fixed mounting of the camera with respect to the headset and/or a determined offset (e.g. with 3DOF or 6DOF) between the origins (e.g., based at least on image data acquired by the camera and positioning data acquired by the positioning system). The camera-to-positioning transformation may be determined, for example, from a CAD design for the headset.

At block 620, a BIM-to-positioning transformation is determined between the coordinate system used by the positioning system and the coordinate system used by the BIM based on the BIM-to-camera transformation and the camera-to-positioning transformation. This determination may be performed as described above. For example, each transformation from blocks 616 and 618 represents a linear transformation of a point coordinate and so a third linear transformation may be determined as a combination of the two linear transformations. The BIM-to-positioning transformation is used to map the building information model to the coordinate system used by the positioning system to display the building information model as viewed from the pose of the headset determined using the positioning system.

At block 622, the method 600 may end or may be repeated (as indicated by the dotted line). For example, the method may be repeated to continually update the BIM-to-positioning transformation to ensure accurate alignment of the BIM in the augmented reality glasses 250. In certain cases, the method is repeated during movement of the headset at the construction site to obtain a plurality of estimates for the BIM-to-positioning transformation. In these cases, the method 600 may further comprise optimising the plurality of estimates for the BIM-to-positioning transformation to determine an optimised BIM-to-positioning transformation for use in displaying the building information model. In certain examples, the construction site comprises a plurality of two-dimensional markers positioned at different locations. In these examples, a plurality of estimates for the BIM-to-positioning transformation may be based on the plurality of two-dimensional markers, which may help to reduce noise and increase accuracy.

In certain examples, block 612 comprises determining a set of poses for the headset using a plurality of positioning systems. Each positioning system may have a different coordinate system and origin within said coordinate system. In these examples, blocks 614 and 616 may be performed as described above, while block 618 may comprise determining a camera-to-positioning transformation for each positioning system. Using these different camera-to-positioning transformations and the output of block 616, at least one transformation may be determined to map the coordinate system used by each positioning system to the coordinate system used by the BIM. In one case, there may be a different BIM-to-positioning transformation for each positioning system. In another case, there may be one or more primary positioning systems that have computed BIM-to-positioning transformations and one or more ancillary positioning systems that have transformations that first map to the coordinate systems for the one or more primary positioning systems.

In certain examples, the method 600 may comprise initial blocks that reflect the measurements shown in FIGS. 4A and 4B. For example, the method 600 may initially comprise blocks of positioning the 2D marker upon a planar surface at the construction site; positioning at least three control markers in relation to the 2D marker; measuring locations of the at least three control markers using a surveying device; and storing the measured locations of the at least three control markers with reference to the coordinate system of the building information model. In this case, the spatial relationship between the at least three control markers and the 2D marker is defined. For example, the control markers may form part of the 2D marker as in FIG. 3E or may be located a defined distance from the 2D marker as in FIGS. 3A and 3C.

In certain examples, block 616 comprises detecting a set of corners for the two-dimensional marker and mapping at least three two-dimensional corner coordinates to corresponding locations of the corners as defined in the coordinate system of the BIM. The set of corners may be defined by data indicating a set of two-dimensional corner coordinates with respect to the image. Block 616 may also comprise extracting coded information from the two-dimensional marker and using the extracted coded information to determine the defined positions within the coordinate system of the BIM.

In certain variations of any of the examples described herein, surveying equipment markers, such as total station markers are placed around (or integrated within) a two-dimensional marker. In one case, surveying equipment is used to measure the locations of the surveying equipment markers, e.g. as shown in Figures 4A and 4B. In this case, a captured view of one or more of the surveying equipment markers and the two-dimensional marker using the camera, e.g. camera 520 in Figure 5B, may be used to "bind" the measured locations of the surveying equipment markers, as obtained using the surveying equipment, to the two-dimensional marker such that the measured locations and the detected two-dimensional marker are usable to derive a BIM-to-positioning-system transformation as described herein.

The binding of the surveying equipment markers and the two-dimensional marker may be performed in a number of different ways. In preferred variations, the binding comprising transmitting the measured locations of the surveying equipment markers from the surveying equipment to a headset as described herein. For example, three or four total station markers may be measured using a total station. The locations of the markers may be measured in a predefined order (e.g., top left, top right, bottom left and bottom right). The measurement may be linked, at the total station, with an identifier. This identifier may be an identifier encoded within the two-dimensional marker or an identifier programmatically associated with an identifier encoded within the two-dimensional marker (e.g., via a database lookup). Linking the measurement may comprise entering a reference into the total station or an interface associated with the total station. Later, when a camera on the headset (such as 260 or 520) views the two-dimensional marker, the identifier of the marker may be decoded (e.g., using standard image processing or computer vision libraries). The headset may then issue a request to the total station for the measured locations of the total station markers and supply the decoded identifier (or an identifier derived from the decoded identifier) to the total station over a wireless channel (such as Wi-Fi, Bluetooth®, Zigbee® or a telecommunications network link, e.g. via the Internet). The total station may receive the request and supply in response the measured locations associated with the received identifier. In this manner, the measured locations of the surveying equipment markers may be easily transferred from the surveying equipment to the headset to perform calibration. This then avoids needing to store the measured locations of the surveying equipment markers on an intermediate solid-state memory and/or download the measurements to a computing device for subsequent transfer to the headset (although in other variations these approaches may alternatively be used). It should be noted that there may be different methods to wirelessly transfer measurements between surveying equipment and the headset depending on the configuration of each device. For example, in one case a total station may respond with a plurality of measurements that are indexed by different identifiers and these may be transmitted to the headset. In this case, the headset may determine which sets of measurements relate to a current view of the camera. In another case, an initial or pre-existing BIM-to-positioning transformation may be present in the headset. This may allow the approximate location of the markers within the BIM coordinate system to be determined. The headset may then select a set of measurements that are closest to this approximate location. A predefined order of measurement (e.g., as described above) may then be used to link individual measurements to viewed surveying equipment markers.

The examples described herein provide improvements over comparative calibration approaches for the display of an augmented reality BIM. The examples may use the fact that certain key structures within a construction site, such as walls and columns, are surveyed at initial milestone points during construction. The present method adds the placing and measurement of 2D markers as part of this existing surveyance. For example, once a total station is set up in a space, making multiple measurements of additional control marker is relatively quick (e.g., on the order of seconds). These 2D markers are then usable for rapid configuration of a headset for displaying the BIM during subsequent construction, such as interior construction where accurate placement of finishes is desired. A headset comprising a camera and sensor devices for a positioning system is able to view the 2D markers and rapidly ascertain the position of the camera with respect to the 2D marker on the planar surface. The camera may be a relatively low specification addition to an existing headset and/or may form part of an implemented positioning system. The position of the camera with respect to the 2D marker on the planar surface may then be further mapped to a location of the headset as defined within a coordinate system used by the positioning system based on known or computed spatial properties of the headset. This then enables a transformation between the BIM and the positioning system to be determined without requiring a calibration tool, e.g. a user does not need to position a calibration tool at three or four known points to configure the transformation.

If not explicitly stated, all of the publications referenced in this document are herein incorporated by reference. The above examples and embodiments are to be understood as illustrative. Further examples and embodiments are envisaged. Although certain components of each example and embodiment have been separately described, it is to be understood that functionality described with reference to one example or and embodiment may be suitably implemented in another example or and embodiment, and that certain components may be omitted depending on the implementation. It is to be understood that any feature described in relation to any one example or and embodiment may be used alone, or in combination with other features described, and may also be used in combination with one or more features of any other of the examples or and embodiments, or any combination of any other of the examples or and embodiments. For example, features described with respect to the system components may also be adapted to be performed as part of the described methods. Furthermore, equivalents and modifications not described above may also be employed without departing from the scope of the invention, which is defined in the accompanying claims.

**Claims**

1. A method (600) of configuring a headset for display of a building information model (BIM) at a construction site, the method comprising:

   obtaining (614) an image of a two-dimensional marker positioned within the construction site, the image being obtained by a camera (260) coupled to the headset, the two-dimensional marker being positioned with respect to known positions within a coordinate system of the building information model;
   wherein the method comprises:

   determining (612) a pose of the headset using a positioning system, the positioning system comprising a set of sensor devices (202a,...202n) coupled to the headset to track a position and orientation of the headset over time, the positioning system determining the pose of the headset with respect to an origin of a coordinate system used by the positioning system, the positioning system determining a pose of the headset independently of the two-dimensional marker;
   determining (616) a BIM-to-camera transformation ($^{BIM}T_C$) between an origin of a coordinate system used by the building information model and an origin of the coordinate system of the camera based on a location of the two-dimensional marker within the image;
   determining (618) a camera-to-positioning transformation ($^{C}T_{PS}$) between the origin of the coordinate system used by the camera and an origin of the coordinate system used by the positioning system based on a specification of the spatial relationship between the headset and the camera; and
   determining (620) a BIM-to-positioning transformation between the coordinate system used by the positioning system and the coordinate system used by the building information model based on the BIM-to-camera transformation and the camera-to-positioning transformation,
   wherein the BIM-to-positioning transformation is used to map the building information model to the coordinate system used by the positioning system to display the building information model as viewed from the pose of the headset determined using the positioning system.

2. The method (600) of claim 1, wherein the two-dimensional marker is positioned in relation to a set of control markers, the set of control markers having defined coordinates within the coordinate system of the building information model, and the method comprises:

   positioning the two-dimensional marker upon a planar surface at the construction site;
   positioning at least three control markers in relation to the two-dimensional marker;
   measuring locations of the at least three control markers using a surveying device; and
   storing the measured locations of the at least three control markers with reference to the coordinate system of the building information model,
   wherein the spatial relationship between the at least three control markers and the two-dimensional marker is defined.

3. The method (600) of any one of claims 1 to 2, wherein determining a BIM-to-camera transformation comprises:

   detecting a set of corners for the two-dimensional marker, the set of corners being defined by data indicating a set of two-dimensional corner coordinates with respect to the image; and
   mapping at least three of the set of two-dimensional corner coordinates to corresponding locations of the corners as defined in the coordinate system of the building information model to determine the BIM-to-camera transformation.

4. The method (600) of any one of claims 1 to 3, wherein the origins are defined with six-degrees of freedom and the transformations are defined as matrix transformations with rotation and translation terms.

5. The method (600) of any one of claims 1 to 4, wherein the construction site comprises a plurality of two-dimensional markers positioned at different locations, and wherein the method is repeated during movement of the headset at the construction site to obtain a plurality of estimates for the BIM-to-positioning transformation, and wherein the method further comprises:
   optimising the plurality of estimates for the BIM-to-positioning transformation to determine an optimised BIM-to-positioning transformation for use in displaying the building information model.

**6.** The method (600) of any one of claims 1 to 5, wherein the headset forms part of a construction helmet, and one of:

> the set of sensor devices comprise at least one camera (260), and the positioning system comprises a simultaneous localisation and mapping system;
> the set of sensor devices comprise a plurality of markers mounted on an external surface of the construction helmet, wherein the positioning system comprises a set of cameras (202a,...202n) to detect electromagnetic radiation from the plurality of markers to track the headset within a tracked volume; and
> the set of sensor devices comprise a plurality of sensor devices mounted on an external surface of the construction helmet, wherein the positioning system comprises a set of external beacon devices that emit one or more beams of electromagnetic radiation that are detected by the plurality of sensor devices to track the headset within a tracked volume.

**7.** The method (600) of any one of claims 1 to 6,

> wherein determining a pose of the headset using a positioning system comprises determining a set of poses for the headset using a plurality of positioning systems, each positioning system having a different coordinate system and origin within said coordinate system;
> wherein determining a camera-to-positioning transformation comprises determining a camera-to-positioning transformation for each positioning system; and
> wherein determining a BIM-to-positioning transformation comprises determining at least one transformation to map the coordinate system used by each positioning system to the coordinate system used by the building information model.

**8.** The method (600) of any one of claims 1 to 7, wherein positions and orientations are defined using dual quaternion coordinates.

**9.** The method (600) of any one of claims 1 to 8, comprising:

> extracting coded information from the two-dimensional marker; and
> using the extracted coded information to determine the defined positions within the coordinate system of the building information model.

**10.** A headset (530) for use in construction at a construction site, the headset comprising:

an article of headwear;
one or more cameras (520);
a head-mounted display for displaying a virtual image of a building information model (BIM); and
an electronic control system comprising at least one processor to:

> obtain (614) an image (570) of a two-dimensional marker (540) positioned within the construction site from the camera (520), the two-dimensional marker (540) being positioned with respect to defined positions within a coordinate system of the building information model;
> the headset (530) comprising:

> > a set of sensor devices for a positioning system, the set of sensor devices operating to track a position and orientation (532) of the headset at the construction site over time with respect to an origin of a coordinate system (534) used by the positioning system;
> > wherein the electronic control system comprises at least one processor to:

> > > determine (612) a pose of the headset using the positioning system, the positioning system determining a pose of the headset independently of the two-dimensional marker;
> > > determine (616) a BIM-to-camera transformation between an origin of a coordinate system (512) used by the building information model and an origin of the coordinate system (522) used by the camera based on a location of the two-dimensional marker (540) within the image (570);
> > > determine (618) a camera-to-positioning transformation between the origin of the coordinate system (522) used by the camera and an origin of the coordinate system used by the positioning system (534) based on a specification of the spatial relationship between the headset and the camera (520); and
> > > determine (620) a BIM-to-positioning transformation between the coordinate system (534) used by the positioning system and the coordinate system (512) used by the building information model based on the BIM-to-camera transformation and the camera-to-positioning transformation,

wherein the BIM-to-positioning transformation is used to render a virtual image of the building information model relative to the pose of the headset on the head-mounted display.

11. The headset (530) of claim 10, wherein positions of a set of corners (572) of the two-dimensional marker are defined within the building information model and the two-dimensional marker is attached to a structure at the construction site that is defined within the building information model.

12. The headset (530) of claim 11, wherein the two-dimensional marker (540) is positioned within the construction site in relation to a plurality of control markers, wherein the measured coordinates of the plurality of control markers are used to determine the defined positions within the coordinate system of the building information model.

13. The headset (530) of any one of claims 10 to 12, wherein the electronic control system is further configured to:

obtain a plurality of estimates for the BIM-to-positioning transformation while the headset is tracked with the positioning system; and optimise the plurality of estimates for the BIM-to-positioning transformation to determine an optimised BIM-to-positioning transformation for use in displaying the building information model.

14. The headset (530) of any one of claims 10 to 13, wherein the positioning system forms part of one or more positioning systems coupled to the headset, and wherein the electronic control system is configured to determine a BIM-to-positioning transformation for each of the one or more positioning systems.

15. A computer program comprising instructions which, when executed by at least one processor, cause the at least one processor to perform the method of any one of claims 1 to 9.

**Patentansprüche**

1. Verfahren (600) zum Konfigurieren eines Headsets für die Anzeige eines Gebäudeinformationsmodells (BIM) auf einer Baustelle, das Verfahren umfassend:

Erhalten (614) eines Bildes einer zweidimensionalen Markierung, die innerhalb der Baustelle positioniert ist, wobei das Bild von einer Kamera (260) erhalten wird, die mit dem Headset gekoppelt ist, wobei die zweidimensionale Markierung in Bezug auf bekannte Positionen innerhalb eines Koordinatensystems des Gebäudeinformationsmodells positioniert ist;

wobei das Verfahren Folgendes umfasst:

Bestimmen (612) einer Position des Headsets unter Verwendung eines Positionierungssystems, wobei das Positionierungssystem einen Satz von Sensorvorrichtungen (202a,...202n) umfasst, die mit dem Headset gekoppelt sind, um eine Position und Ausrichtung des Headsets über die Zeit zu verfolgen, wobei das Positionierungssystem die Position des Headsets in Bezug auf einen Ursprung eines von dem Positionierungssystem verwendeten Koordinatensystems bestimmt, wobei das Positionierungssystem eine Position des Headsets unabhängig von der zweidimensionalen Markierung bestimmt;

Bestimmen (616) einer BIM-zu-Kamera-Transformation (BIMTC) zwischen einem Ursprung eines von dem Gebäudeinformationsmodell verwendeten Koordinatensystems und einem Ursprung des Koordinatensystems der Kamera basierend auf einer Position der zweidimensionalen Markierung innerhalb des Bildes;

Bestimmen (618) einer Kamera-zu-Positionierungs-Transformation (CTPS) zwischen dem Ursprung des von der Kamera verwendeten Koordinatensystems und einem Ursprung des von dem Positionierungssystem verwendeten Koordinatensystems basierend auf einer Spezifikation der räumlichen Beziehung zwischen dem Headset und der Kamera; und

Bestimmen (620) einer BIM-zu-Positionierungs-Transformation zwischen dem vom Positionierungssystem verwendeten Koordinatensystem und dem vom Gebäudedatenmodell verwendeten Koordinatensystem basierend auf der BIM-zu-Kamera-Transformation und der Kamera-zu-Positionierungs-Transformation,

wobei die BIM-zu-Positionierungs-Transformation verwendet wird, um das Gebäudeinformationsmodell auf das Koordinatensystem abzubilden, das von dem Positionierungssystem verwendet wird, um das Gebäudeinformationsmodell von der Position des Headsets aus gesehen anzuzeigen, die unter Verwendung des Positionierungssystems bestimmt wurde.

2. Verfahren (600) nach Anspruch 1, wobei die zweidimensionale Markierung in Bezug auf einen Satz von Steuermarkierungen positioniert wird, wobei der Satz von Steuermarkierungen definierte Koordinaten innerhalb des Koordinatensystems des Gebäudeinformationsmodells aufweist, und das Verfahren Folgendes umfasst:

Positionieren der zweidimensionalen Markierung auf einer ebenen Oberfläche auf der Baustelle;
Positionieren von mindestens drei Steuermarkierungen in Bezug auf die zweidimensionale Markierung;
Messen der Standorte der mindestens drei Steuermarkierungen mit einer Vermessungsvorrichtung; und
Speichern der gemessenen Positionen der mindestens drei Steuermarkierungen mit Bezug auf das Koordinatensystem des Gebäudeinformationsmodells,
wobei die räumliche Beziehung zwischen den mindestens drei Steuermarkierungen und der zweidimensionalen Markierung definiert ist.

3. Verfahren (600) nach einem der Ansprüche 1 bis 2, wobei das Bestimmen einer BIM-zu-Kamera-Transformation Folgendes umfasst:

Erkennen eines Satzes von Eckpunkten für die zweidimensionale Markierung, wobei der Satz von Eckpunkten durch Daten definiert ist, die einen Satz von zweidimensionalen Eckpunktkoordinaten in Bezug auf das Bild angeben; und
Abbilden von mindestens drei des Satzes von zweidimensionalen Eckkoordinaten auf entsprechende Positionen der Eckpunkte, wie sie im Koordinatensystem des Gebäudedatenmodells definiert sind, um die BIM-zu-Kamera-Transformation zu bestimmen.

4. Verfahren (600) nach einem der Ansprüche 1 bis 3, wobei die Ursprünge mit sechs Freiheitsgraden definiert sind und die Transformationen als Matrixtransformationen mit Drehungs- und Translationsterms definiert sind.

5. Verfahren (600) nach einem der Ansprüche 1 bis 4, wobei die Baustelle eine Vielzahl von zweidimensionalen Markierungen umfasst, die an verschiedenen Orten positioniert sind, und wobei das Verfahren während der Bewegung des Headsets auf der Baustelle wiederholt wird, um eine Vielzahl von Schätzungen für die BIM-zu-Positionierungs-Transformation zu erhalten, und wobei das Verfahren ferner Folgendes umfasst:
Optimieren der Vielzahl von Schätzungen für die BIM-zu-Positionierungs-Transformation, um eine optimierte BIM-zu-Positionierungs-Transformation zur Verwendung bei dem Anzeigen des Gebäudedatenmodells zu bestimmen.

6. Verfahren (600) nach einem der Ansprüche 1 bis 5, wobei das Headset Teil eines Bauhelms ist, und eines von Folgendem:

der Satz von Sensorvorrichtungen mindestens eine Kamera (260) umfasst, und das Positionierungssystem ein System zur gleichzeitigen Lokalisierung und Abbildung umfasst;
der Satz von Sensorvorrichtungen eine Vielzahl von Markierungen umfasst, die an einer Außenoberfläche des Bauhelms befestigt sind, wobei das Positionierungssystem einen Satz von Kameras (202a,...202n) umfasst, um elektromagnetische Strahlung von der Vielzahl von Markierungen zu erfassen, um das Headset innerhalb eines verfolgten Volumens zu verfolgen; und
der Satz von Sensorvorrichtungen eine Vielzahl von Sensorvorrichtungen umfasst, die an einer Außenoberfläche des Bauhelms befestigt sind, wobei das Positionierungssystem einen Satz von externen Bakenvorrichtungen umfasst, die einen oder mehrere Strahlen elektromagnetischer Strahlung emittieren, die von der Vielzahl von Sensorvorrichtungen erkannt werden, um den Kopfhörer innerhalb eines verfolgten Volumens zu verfolgen.

7. Verfahren (600) nach einem der Ansprüche 1 bis 6, wobei das Bestimmen einer Pose des Headsets unter Verwendung eines Positionierungssystems das Bestimmen eines Satzes von Posen für das Headset unter Verwendung einer Vielzahl von Positionierungssystemen umfasst, wobei jedes Positionierungssystem ein anderes Koordinatensystem und einen anderen Ursprung innerhalb des Koordinatensystems aufweist;

wobei das Bestimmen einer Kamera-zu-Positionierungs-Transformation das Bestimmen einer Kamera-zu-Positionierungs-Transformation für jedes Positionierungssystem umfasst; und
wobei das Bestimmen einer BIM-zu-Positionierungs-Transformation das Bestimmen mindestens einer Transformation umfasst, um das von jedem Positionierungssystem verwendete Koordinatensystem auf das von dem Gebäudeinformationsmodell verwendete Koordinatensystem abzubilden.

8. Verfahren (600) nach einem der Ansprüche 1 bis 7, wobei Positionen und Ausrichtungen unter Verwendung dualer Quaternionenkoordinaten definiert werden.

9. Verfahren (600) nach einem der Ansprüche 1 bis 8, umfassend:

> Extrahieren codierter Informationen aus der zweidimensionalen Markierung; und
> Verwenden der extrahierten codierten Informationen, um die definierten Positionen innerhalb des Koordinatensystems des Gebäudedatenmodells zu bestimmen.

10. Headset (530) zur Verwendung im Bauwesen auf einer Baustelle, das Headset umfassend:

> ein Artikel der Kopfbedeckung;
> eine oder mehrere Kameras (520);
> eine am Kopf befestigte Anzeige zum Anzeigen eines virtuellen Bildes eines Gebäudedatenmodells (BIM); und
> ein elektronisches Steuersystem, das mindestens einen Prozessor umfasst zum:
>
>> Erhalten (614) eines Bildes (570) einer innerhalb der Baustelle positionierten zweidimensionalen Markierung (540) von der Kamera (520), wobei die zweidimensionale Markierung (540) in Bezug auf definierte Positionen innerhalb eines Koordinatensystems des Gebäudeinformationsmodells positioniert ist;
>> das Headset (530) umfassend:
>>
>>> einen Satz von Sensorvorrichtungen für ein Positionierungssystem, wobei der Satz von Sensorvorrichtungen dazu dient, eine Position und
>>> Ausrichtung (532) des Headsets auf der Baustelle im Laufe der Zeit in Bezug auf einen Ursprung eines vom Positionierungssystem verwendeten Koordinatensystems (534) zu verfolgen;
>>> wobei das elektronische Steuersystem mindestens einen Prozessor umfasst zum:
>>>
>>>> Bestimmen (612) einer Pose des Headsets unter Verwendung des Positionierungssystems, wobei das Positionierungssystem eine Pose des Headsets unabhängig von der zweidimensionalen Markierung bestimmt;
>>>> Bestimmen (616) einer BIM-zu-Kamera-Transformation zwischen einem Ursprung eines von dem Gebäudeinformationsmodell verwendeten Koordinatensystems (512) und einem Ursprung des von der Kamera verwendeten Koordinatensystems (522) basierend auf einer Position der zweidimensionalen Markierung (540) innerhalb des Bildes (570);
Bestimmen (618) einer Kamera-zu-Positionierungs-Transformation zwischen dem Ursprung des von der Kamera verwendeten Koordinatensystems (522) und einem Ursprung des vom Positionierungssystem (534) verwendeten Koordinatensystems basierend auf einer Spezifikation der räumlichen Beziehung zwischen dem Headset und der Kamera (520); und
Bestimmen (620) einer BIM-zu-Positionierungs-Transformation zwischen dem vom Positionierungssystem verwendeten Koordinatensystem (534) und dem vom Gebäudedatenmodell verwendeten Koordinatensystem (512) basierend auf der BIM-zu-Kamera-Transformation und der Kamera-zu-Positionierungs-Transformation,
wobei die BIM-zu-Positionierungs-Transformation verwendet wird, um ein virtuelles Bild des Gebäudeinformationsmodells relativ zur Position des Headsets auf der am Kopf befestigten Anzeige darzustellen.

11. Headset (530) nach Anspruch 10, wobei die Positionen eines Satzes von Eckpunkten (572) der zweidimensionalen Markierung innerhalb des Gebäudeinformationsmodells definiert sind und die zweidimensionale Markierung an einer Struktur auf der Baustelle angebracht ist, die innerhalb des Gebäudeinformationsmodells definiert ist.

12. Headset (530) nach Anspruch 11, wobei die zweidimensionale Markierung (540) innerhalb der Baustelle in Bezug auf eine Vielzahl von Steuermarkierungen positioniert ist, wobei die gemessenen Koordinaten der Vielzahl von Steuermarkierungen verwendet werden, um die definierten Positionen innerhalb des Koordinatensystems des Gebäudeinformationsmodells zu bestimmen.

13. Headset (530) nach einem der Ansprüche 10 bis 12, wobei das elektronische Steuersystem ferner konfiguriert ist zum:

> Erhalten einer Vielzahl von Schätzungen für die BIM-zu-Positionierungs-Transformation, während das Headset mit dem Positionierungssystem verfolgt wird; und

Optimieren der Vielzahl von Schätzungen für die BIM-zu-Positionierungs-Transformation, um eine optimierte BIMzu-Positionierungs-Transformation zur Verwendung bei dem Anzeigen des Gebäudedatenmodells zu bestimmen.

14. Headset (530) nach einem der Ansprüche 10 bis 13, wobei das Positionierungssystem einen Teil eines oder mehrerer mit dem Headset gekoppelter Positionierungssysteme bildet und wobei das elektronische Steuersystem konfiguriert ist, um eine BIMzu-Positionierungs-Transformation für jedes der einen oder mehreren Positionierungssysteme zu bestimmen.

15. Computerprogramm, umfassend Anweisungen, die, wenn sie von mindestens einem Prozessor ausgeführt werden, den mindestens einen Prozessor veranlassen, das Verfahren nach einem der Ansprüche 1 bis 9 durchzuführen.

## Revendications

1. Procédé (600) de configuration d'un casque pour l'affichage d'un modèle d'information du bâtiment (BIM) sur un chantier de construction, le procédé comprenant :

l'obtention (614) d'une image d'un marqueur bidimensionnel positionné dans le chantier de construction, l'image étant obtenue par une caméra (260) couplée au casque, le marqueur bidimensionnel étant positionné par rapport à des positions connues dans un système de coordonnées du modèle d'information du bâtiment ;

dans lequel le procédé comprend :

la détermination (612) d'une pose du casque à l'aide d'un système de positionnement, le système de positionnement comprenant un ensemble de dispositifs de capteurs (202a,...202n) couplés au casque pour suivre une position et une orientation du casque au fil du temps, le système de positionnement déterminant la pose du casque par rapport à une origine d'un système de coordonnées utilisé par le système de positionnement, le système de positionnement déterminant une pose du casque indépendamment du marqueur bidimensionnel ;

la détermination (616) d'une transformation BIM-à-caméra (BIMTC) entre une origine d'un système de coordonnées utilisé par le modèle d'information du bâtiment et une origine du système de coordonnées de la caméra basée sur l'emplacement du marqueur bidimensionnel dans l'image ;

la détermination (618) d'une transformation caméra-positionnement (CTPS) entre l'origine du système de coordonnées utilisé par la caméra et une origine du système de coordonnées utilisé par le système de positionnement, sur la base d'une spécification de la relation spatiale entre le casque et la caméra ; et

la détermination (620) d'une transformation BIM-positionnement entre le système de coordonnées utilisé par le système de positionnement et le système de coordonnées utilisé par le modèle d'information du bâtiment basé sur la transformation BIM-à-caméra et la transformation caméra-positionnement,

dans lequel la transformation BIM-positionnement est utilisée pour mapper le modèle d'information du bâtiment au système de coordonnées utilisé par le système de positionnement pour afficher le modèle d'information du bâtiment tel qu'il est vu depuis la pose du casque déterminée à l'aide du système de positionnement.

2. Procédé (600) de la revendication 1, dans lequel le marqueur bidimensionnel est positionné par rapport à un ensemble de marqueurs de commande, l'ensemble de marqueurs de commande ayant des coordonnées définies dans le système de coordonnées du modèle d'information du bâtiment, et le procédé comprend :

le positionnement du marqueur bidimensionnel sur une surface plane sur le chantier ;

le positionnement d'au moins trois marqueurs de commande par rapport au marqueur bidimensionnel ;

la mesure de l'emplacement des au moins trois marqueurs de commande à l'aide d'un appareil topographique ; et le stockage des emplacements mesurés des au moins trois marqueurs de commande par rapport au système de coordonnées du modèle d'information du bâtiment, dans lequel la relation spatiale entre l'au moins trois marqueurs de commande et le marqueur bidimensionnel est définie.

3. Procédé (600) selon l'une quelconque des revendications 1 à 2, dans lequel la détermination d'une transformation BIM-à-caméra comprend :

la détection d'un ensemble de coins pour le marqueur bidimensionnel, l'ensemble de coins étant défini par des données indiquant un ensemble de coordonnées de coins bidimensionnels par rapport à l'image ; et
le mappage d'au moins trois des coordonnées bidimensionnelles des coins aux emplacements correspondants des coins tels que définis dans le système de coordonnées du modèle d'information du bâtiment pour déterminer la transformation BIM-à-caméra.

4. Procédé (600) de l'une quelconque des revendications 1 à 3, dans lequel les origines sont définies avec six degrés de liberté et les transformations sont définies comme des transformations matricielles avec des termes de rotation et de translation.

5. Procédé (600) selon l'une quelconque des revendications 1 à 4, dans lequel le chantier comprend une pluralité de marqueurs bidimensionnels positionnés à différents endroits, et dans lequel le procédé est répété lors du déplacement du casque sur le chantier afin d'obtenir une pluralité d'estimations pour la transformation BIM-positionnement, et dans lequel le procédé comprend également :
l'optimisation de la pluralité des estimations pour la transformation BIM-positionnement afin de déterminer une transformation BIM-positionnement optimisée à utiliser pour l'affichage du modèle d'information du bâtiment.

6. Procédé (600) selon l'une quelconque des revendications 1 à 5, dans lequel le casque fait partie d'un casque de chantier, et l'un :

de l'ensemble des dispositifs de capteurs comprend au moins une caméra (260), et le système de positionnement comprend un système d'emplacement et de mappage simultanés ;
de l'ensemble des dispositifs de capteurs comprend une pluralité de marqueurs montés sur une surface externe du casque de chantier, dans lequel le système de positionnement comprend un ensemble de caméras (202a,...202n) pour détecter le rayonnement électromagnétique émis par la pluralité de marqueurs afin de suivre le casque dans un volume suivi ; et
de l'ensemble des dispositifs de capteurs comprend une pluralité de dispositifs de capteurs montés sur une surface externe du casque de chantier, dans lequel le système de positionnement comprend un ensemble de dispositifs de balise externes qui émettent un ou plusieurs faisceaux de rayonnement électromagnétique qui sont détectés par la pluralité de dispositifs de capteurs pour suivre le casque dans un volume suivi.

7. Procédé (600) selon l'une quelconque des revendications 1 à 6,

dans lequel la détermination d'une pose du casque à l'aide d'un système de positionnement comprend la détermination d'un ensemble de poses pour le casque à l'aide d'une pluralité de systèmes de positionnement, chaque système de positionnement ayant un système de coordonnées et une origine différents au sein dudit système de coordonnées ;
dans lequel la détermination d'une transformation caméra-positionnement comprend la détermination d'une transformation caméra-positionnement pour chaque système de positionnement ; et
dans lequel la détermination d'une transformation BIM-positionnement comprend la détermination d'au moins une transformation pour mapper le système de coordonnées utilisé par chaque système de positionnement au système de coordonnées utilisé par le modèle d'information du bâtiment.

8. Procédé (600) selon l'une quelconque des revendications 1 à 7, dans lequel les positions et les orientations sont définies à l'aide de coordonnées quaternioniques duales.

9. Procédé (600) selon l'une quelconque des revendications 1 à 8, comprenant :

l'extraction des informations codées à partir du marqueur bidimensionnel ; et
l'utilisation des informations codées extraites pour déterminer les positions définies à l'intérieur du système de coordonnées du modèle d'information du bâtiment.

10. Casque (530) destiné à être utilisé sur un chantier de construction, le casque comprenant :

un couvre-chef ;
une ou plusieurs caméras (520) ;
un casque de réalité virtuelle pour afficher une image virtuelle d'une maquette numérique du bâtiment (BIM) ; et
un système de commande électronique comprenant au moins un processeur pour :

obtenir (614) une image (570) d'un marqueur bidimensionnel (540) positionné sur le chantier de construction à partir de la caméra (520), le marqueur bidimensionnel (540) étant positionné par rapport à des positions définies dans un système de coordonnées du modèle d'information du bâtiment ;

le casque (530) comprenant :

un ensemble de dispositifs de capteurs pour un système de positionnement, l'ensemble de dispositifs de capteurs fonctionnant pour suivre une position et une orientation (532) du casque sur le chantier de construction au fil du temps par rapport à une origine d'un système de coordonnées (534) utilisé par le système de positionnement ;

dans lequel le système de commande électronique comprend au moins un processeur pour :

déterminer (612) une pose du casque à l'aide du système de positionnement, le système de positionnement déterminant une pose du casque indépendamment du marqueur bidimensionnel ;

déterminer (616) une transformation BIM-à-caméra entre une origine d'un système de coordonnées (512) utilisé par le modèle d'information du bâtiment et une origine du système de coordonnées (522) utilisé par la caméra sur la base de l'emplacement du marqueur bidimensionnel (540) dans l'image (570) ;

déterminer (618) une transformation caméra-positionnement entre l'origine du système de coordonnées (522) utilisé par la caméra et une origine du système de coordonnées utilisé par le système de positionnement (534) sur la base d'une spécification de la relation spatiale entre le casque et la caméra (520) ; et

déterminer (620) une transformation BIM-positionnement entre le système de coordonnées (534) utilisé par le système de positionnement et le système de coordonnées (512) utilisé par le modèle d'information du bâtiment sur la base de la transformation BIM-à-caméra et de la transformation caméra-positionnement,

dans lequel la transformation BIM-positionnement est utilisée pour afficher une image virtuelle du modèle d'information du bâtiment par rapport à la pose du casque sur l'écran monté sur la tête.

11. Casque (530) de la revendication 10, dans lequel les positions d'un ensemble de coins (572) du marqueur bidimensionnel sont définies dans le modèle d'information du bâtiment et le marqueur bidimensionnel est fixé à une structure sur le site de construction qui est définie dans le modèle d'information du bâtiment.

12. Casque (530) selon la revendication 11, dans lequel le marqueur bidimensionnel (540) est positionné dans le chantier de construction par rapport à une pluralité de marqueurs de commande, dans lequel les coordonnées mesurées de la pluralité de marqueurs de commande sont utilisées pour déterminer les positions définies dans le système de coordonnées du modèle d'information du bâtiment.

13. Casque (530) selon l'une quelconque des revendications 10 à 12, dans lequel le système de commande électronique est également configuré pour :

obtenir une pluralité d'estimations pour la transformation BIM-positionnement pendant que le casque est suivi par le système de positionnement ; et

optimiser la pluralité des estimations pour la transformation BIM-positionnement afin de déterminer une transformation BIM-positionnement optimisée à utiliser pour l'affichage du modèle d'information du bâtiment.

14. Casque (530) selon l'une quelconque des revendications 10 à 13, dans lequel le système de positionnement fait partie d'un ou de plusieurs systèmes de positionnement couplés au casque, et dans lequel le système de commande électronique est configuré pour déterminer une transformation BIM-positionnement pour chacun des un ou plusieurs systèmes de positionnement.

15. Programme informatique comprenant des instructions qui, lorsqu'elles sont exécutées par au moins un processeur, amènent l'au moins un processeur à réaliser le procédé selon l'une quelconque des revendications 1 à 9.

**FIG. 1A**

**FIG. 1B**

EP 4 314 707 B1

**FIG. 2A**

FIG. 2B

EP 4 314 707 B1

**FIG. 3A**

**FIG. 3B**

33

340

342

**FIG. 3C**

350

352

352

352

354

**FIG. 3E**

340

**FIG. 3D**

350

**FIG. 3F**

400

410

412

330

**FIG. 4A**

450

410

412

450

**FIG. 4B**

**FIG. 5A**

**FIG. 5B**

600

610 Start

612 Determine Headset Pose with Positioning System

614 Obtain Image of 2D Barcode

616 Determine $^{BIM}T_C$ using Image of 2D Barcode

618 Determine $^{C}T_{PS}$ using Spatial Relationship

620 Determine $^{BIM}T_{PS}$ using $^{BIM}T_C$ and $^{C}T_{PS}$

622 End

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019048866 A1
- EP 3679321 A

- US 2016292918 A1
- US 9754415 B2
- US 20130235169 A1

**Non-patent literature cited in the description**

- **JOHN WANG** ; **EDWIN OLSON**. AprilTag 2: Efficient and robust fiducial detection. *Proceedings of the IEEE/RSJ International Conference on Intelligent Robots and Systems*, October 2016
- **S. GARRIDO-JURADO et al.** Automatic generation and detection of highly reliable fiducial markers under occlusion. *Pattern Recognition*, June 2014, vol. 47, 6
- **MUR-ARTAL et al.** ORB-SLAM: a Versatile and Accurate Monocular SLAM System. *IEEE Transactions on Robotics*, 2015

- **ENGEL et al.** LSD-SLAM: Large-Scale Direct Monocular SLAM. *European Conference on Computer Vision (ECCV)*, 2014
- **BLOESCH et al.** CodeSLAM - Learning a Compact Optimisable Representation for Dense Visual SLAM. *Conference on Computer Vision and Pattern Recognition - CVPR*, 2018
- **TATENO et al.** CNN-SLAM: Real-time dense Monocular SLAM with Learned Depth Prediction. *CVPR*, 2017